(19)

**Europäisches Patentamt**

**European Patent Office**

**Office européen des brevets**

(11) **EP 4 757 191 A1**

(12) **EUROPEAN PATENT APPLICATION**

(43) Date of publication:
**10.06.2026 Bulletin 2026/24**

(21) Application number: **25219716.5**

(22) Date of filing: **01.12.2025**

(51) International Patent Classification (IPC):
**H04B 1/525** (2015.01)    **H04B 1/00** (2006.01)

(52) Cooperative Patent Classification (CPC):
**H04B 1/525; H04B 1/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.12.2024 US 202418966377**

(71) Applicant: **Avago Technologies International Sales Pte. Limited Singapore 768923 (SG)**

(72) Inventors:
• **Eliaz, Amir**
  **Irvine, CA, 92618 (US)**
• **Intrater, Amos**
  **Irvine, CA, 92618 (US)**
• **Chaikin, Shlomy**
  **Irvine, CA, 92618 (US)**

(74) Representative: **Grünecker Patent- und Rechtsanwälte PartG mbB Leopoldstraße 4 80802 München (DE)**

(54) **INTERFERENCE MITIGATION FOR A MULTIBAND WIRELESS COMMUNICATION SYSTEM**

(57)    The systems and methods for providing interference mitigation for a multiband wireless communication system are disclosed. A device can include wireless transceivers operating on different bands and a circuitry to receive a first signal via a first band and transmit a second signal via a second band. The second signal can cause an interference with the first signal. The interference can include a central portion and a tail portion. A filter can reduce, from a sample of the second signal, the central portion of the interference to provide a filtered sample signal, whose carrier frequency can be adjusted to a different carrier frequency or baseband to provide a converted sample signal. An equalizer can identify, from the converted sample signal, the tail portion of the interference to provide a third signal, which a demodulator can use to reduce the interference from the first signal.

100

FIG. 1

EP 4 757 191 A1

**Description**

TECHNICAL FIELD

This disclosure generally relates to systems and methods of enhancing signal integrity in wireless communication devices, including without limitation, interference mitigation techniques involving transceivers for multiple wireless communication bands.

BACKGROUND

Network communications can be implemented using various wireless communication technologies, including, for example, Wi-Fi, Bluetooth or other radio frequency (RF) systems, which support high-speed data transfer across multiple communication bands. These systems can sometimes encounter challenges related to interference and signal degradation, impacting their performance and user experience.

SUMMARY

The technical solutions of this disclosure provide circuitry mitigating signal interference caused by a transmitted transceiver signal causing interference in another signal that is concurrently received via a different transceiver within the same device. When a wireless device transmits a signal via a first transceiver operating in one frequency band (e.g., 6 GHz of Wi-Fi) while concurrently receiving a second signal in an adjacent channel or band (e.g., 5 GHz of Wi-Fi), the transmitted signal can introduce interference degrading the quality of the received signal. This issue can be exacerbated when the transmitted signal is more powerful than the received signal to cause tail portions of the transmitted signal to impact the received signal, despite signal filtering. In such instances, the wireless device can reduce its transmission power, impacting its own signal transmission range, in order to reduce the interference at the received signal. To overcome such challenges, the technical solution utilizes interference mitigation circuitry that integrates bandpass filters, converters, and equalizers to effectively mitigate the interference from the received signal. In doing so, the technical solutions allow the system to maintain high-quality communication even in environments with substantial interference.

At least one aspect of the technical solutions is directed to a device. The device can include a plurality of wireless transceivers. Each of the plurality of wireless transceivers can operate on a different band of a plurality of bands. The device can include a circuitry to receive a first signal via a first band of the plurality of bands. The circuitry can be configured to transmit a second signal via a second band of the plurality of bands. The second signal can cause an interference with the first signal. The interference can include a central portion and a tail portion. The circuitry can include a band pass filter to reduce, from a sample of the second signal, the central portion of the interference to provide a filtered sample signal. The circuitry can include a converter to adjust a carrier frequency of the filtered sample signal relative to a carrier frequency of the second signal to provide a converted sample signal. The circuitry can include an equalizer to identify, from the converted sample signal, the tail portion of the interference to provide a third signal to offset the interference from the first signal. The circuitry can include a demodulator to reduce the interference from the first signal based at least on the third signal.

The plurality of wireless transceivers can include a first wireless transceiver to receive the first signal and a second wireless transceiver to transmit the second signal. The first wireless transceiver and the second wireless transceiver can each be configured for Wi-Fi wireless communication. The first wireless transceiver can include a first bandpass filter, a first converter, the equalizer and the demodulator and the second wireless transceiver includes the bandpass filter and the converter. The first wireless transceiver can be configured for Wi-Fi wireless communication via a 5 Gigahertz (GHz) band and the second wireless transceiver can be configured for Wi-Fi wireless communication via a 6 GHz band.

The band pass filter can be configured to receive the sample of the first signal from an output of an amplifier of a wireless transceiver of the plurality of wireless transceivers that is configured to transmit the second signal. The band pass filter can be configured to reduce, from the sample of the first signal, frequencies outside of a predetermined range corresponding to the central portion. The converter can be configured to adjust the carrier frequency of the filtered sample signal to provide the converted sample signal at a baseband frequency.

The equalizer can be configured to set one or more parameters that control the equalizer to adjust at least one of a gain of the third signal according to a gain of the first signal or a frequency response of the third signal according to a frequency response of the first signal. The equalizer can be configured to set the one or more parameters to adjust the third signal to offset a distortion in the first signal. The equalizer can utilize a least square function to reduce a difference between a signal generated based on the third signal and the first signal. The least square function can be configured to track changes in the first signal over a time interval using a least mean squares (LMS) operation. The LMS operation can be configured to iteratively adjust parameters of the equalizer to control the third signal to reduce an error in a difference between a signal generated using the third signal and the first signal. 12. The demodulator can be configured to reduce the interference from the first signal by subtracting, from the first signal, a signal generated by the equalizer using third signal.

An aspect of the technical solutions is directed to a method. The method can include receiving, by a circuitry comprising a plurality of wireless transceivers, a first signal via a first band of a plurality of bands. Each of the plurality of transceivers can operate on a different band of the plurality of bands. The method can include transmitting, by the circuitry, a second signal via a second band of the plurality of bands, the second signal causing an interference with the first signal, the interference comprising a central portion and a tail portion. The method can include reducing, by a band pass filter, from a sample of the second signal, the central portion of the interference to provide a filtered sample signal. The method can include adjusting, by a converter, a carrier frequency of the filtered sample signal relative to a carrier frequency of the second signal to provide a converted sample signal. The method can include identifying, by an equalizer, from the converted sample signal, the tail portion of the interference to provide a third signal to offset the interference from the first signal. The method can include reducing, by a demodulator, the interference from the first signal based at least on the third signal.

The plurality of wireless transceivers can include a first wireless transceiver to receive the first signal and a second wireless transceiver to transmit the second signal, the first wireless transceiver and the second wireless transceiver can each be configured for Wi-Fi wireless communication. The first wireless transceiver can include a first bandpass filter, a first converter, the equalizer and the demodulator and the second wireless transceiver includes the bandpass filter and the converter. The first wireless transceiver can be configured for Wi-Fi wireless communication via a first one of a 5 Gigahertz (GHz) band or a 6 GHz band and the second wireless transceiver can be configured for Wi-Fi wireless communication via the 5 GHz band or the 6 GHz band.

The method can include receiving, by the band pass filter, the sample of the first signal from an output of an amplifier of a wireless transceiver of the plurality of wireless transceivers. The wireless transceiver can be configured to transmit the second signal. The method can include reducing, by the band pass filter, from the sample of the first signal, frequencies outside of a predetermined range corresponding to the central portion.

The method can include adjusting, by the converter, the carrier frequency of the filtered sample signal to provide the converted sample signal at a baseband frequency. The method can include setting, by the equalizer, one or more parameters that control the equalizer to adjust at least one of: a gain of the third signal according to a gain of the first signal, a frequency response of the third signal according to a frequency response of the first signal or the third signal to offset a distortion in the first signal.

The method can include reducing, by a least square function of the equalizer, a difference between a signal generated based on the third signal and the first signal. The least square function can be configured to track changes in the first signal over a time interval using a least mean squares (LMS) operation. The method can include iteratively adjusting, via parameters for controlling the equalizer, the third signal to reduce an error in a difference between a signal generated using the third signal and the first signal.

An aspect of the technical solutions is directed to a circuitry. The circuitry can include a plurality of wireless transceivers configured to operate on a first band of a plurality of bands for Wi-Fi wireless communication and a second band of the plurality of bands for Wi-Fi wireless communication. The plurality of wireless transceivers can be configured to receive a first signal via a first band of the plurality of bands. The plurality of wireless transceiver can transmit a second signal via a second band of the plurality of bands, the second signal causing an interference with the first signal. The interference can include a central portion and a tail portion. The plurality of wireless transceivers can include a band pass filter to reduce, from a sample of the second signal, the central portion of the interference to provide a filtered sample signal. The plurality of wireless transceiver can include a converter to adjust a carrier frequency of the filtered sample signal relative to a carrier frequency of the second signal to provide a converted sample signal. The plurality of wireless transceiver can include an equalizer to identify, from the converted sample signal, the tail portion of the interference to provide a third signal to offset the interference from the first signal. The plurality of wireless transceiver can include a demodulator to reduce the interference from the first signal based at least on the third signal.

## BRIEF DESCRIPTION OF THE DRAWINGS

These and other aspects and features of the present embodiments will become apparent to those ordinarily skilled in the art upon review of the following description of specific embodiments in conjunction with the accompanying figures.

FIG. 1 is a diagram depicting an example communication environment with communication systems, according to one or more embodiments.

FIG. 2 is a schematic block diagram of a computing system, according to an embodiment.

FIG. 3A is an example system circuitry for providing interference mitigation for a multiband wireless communication system implemented in a dual transceiver configuration with dedicated transceiver antennas.

FIG. 3B is an example plot of a transmission signal having a central portion and a tail portion of the interference plotted over a frequency range.

FIG. 4 is an example system circuitry for providing interference mitigation for a multiband wireless communication system implemented in configuration with a shared multi-band antenna.

FIG. 5 is an example system circuitry for providing interference mitigation for a multiband wireless communication system implemented in configuration using a power amplifier model.

FIG. 6A and 6B illustrate examples of systems for multiband integrated circuit configurations providing baseband interference mitigation using access point cores and front end modules of a wireless communication device.

FIG. 7 is a flow diagram of a method for providing interference mitigation in a multiband wireless communication system.

DETAILED DESCRIPTION

The present embodiments shall now be described in detail with reference to the drawings, which are provided as illustrative examples of the embodiments so as to enable those skilled in the art to practice the embodiments and alternatives apparent to those skilled in the art. Figures and examples below are not meant to limit the scope of the present embodiments to a single embodiment, but other embodiments are possible by way of interchange of some or all of the described or illustrated elements, or those apparent to a person of ordinary skill in the art. Certain elements of the present embodiments can be partially or fully implemented using known components, only those portions of such known components that are necessary for an understanding of the present embodiments shall be described, and detailed descriptions of other portions of such known components will be omitted so as not to obscure the present embodiments. Embodiments described in their illustrated contexts should not be limited thereto. For example, embodiments described as being implemented in software should not be limited to such implementation alone, but they can include embodiments implemented in hardware, or combinations of software and hardware, and vice-versa, as will be apparent to those skilled in the art, unless otherwise specified herein. In the present specification, an embodiment showing a singular component should not be considered limiting; rather, the present disclosure is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present embodiments encompass present and future known equivalents to the known components referred to herein by way of illustration.

Wireless communication devices can be configured to communicate using multiple wireless transceivers. A wireless transceiver, herein also referred to as a transceiver, can be any circuit or an electronic device that can include the functions of a transmitter, a receiver, or both a transmitter and a receiver combined into a single package, circuit or device. The wireless transceivers can be configured to communicate at different wireless communication bands. A wireless communication band, herein also referred to as a band, can include any range of frequencies over which radio signals are wirelessly transmitted or received. A signal can include any electrical or electromagnetic radiation or wave that can convey information and be transmitted or received by a transceiver.

Based on the system configuration, a transceiver can transmit a first signal via one frequency band (e.g., 6 GHz for Wi-Fi) while another transceiver can simultaneously receive a second signal in an adjacent or a neighboring band (e.g., 5 GHz). In such instances, the transmitted signal can introduce interference that degrades the quality of the received signal, particularly when the transmitted signal is significantly more powerful than the received signal. An interference can include any disruption or alternation of a signal (e.g., a weaker received signal) caused by the presence of unwanted stronger transmission signal, leading to a distortion in the communication system. The power disparity between the transmitted and the received signal can cause the tail portion of the interference signal (e.g., the part of the interference signal preceding or following the central part of the interference and having a decrease in amplitude or strength) to interfere with the received signal. This can occur even after a band pass filter is applied to attenuate or remove the central component of the interference. In such occurrences, the wireless device can scale down its transmission power to mitigate such interference, adversely impacting the effective range of the transmission signal in order to salvage the received signal quality.

To overcome these challenges, the technical solutions present circuitry that mitigates signal interference caused by a transceiver transmitting a signal impacting the quality of another signal simultaneously received a different transceiver within the same device. The solutions can include an interference mitigation circuitry that integrates bandpass filters, down converters, and adaptive algorithms to dynamically adjust the signal processing parameters of equalizers to eliminate both the central component and the tail component of the interference signal. In doing so, the technical solutions provide a more effective technique for mitigating the interference from the received signal, improving the signal clarity and overall system robustness.

For purposes of reading the description of the various embodiments below, the following descriptions of the sections of the specification and their respective contents can be helpful:

- Section A describes a wireless device computing environment which can be useful for practicing embodiments described herein; and

- Section B describes embodiments of baseband interference cancellation

## A. Wireless Device Computing Environment

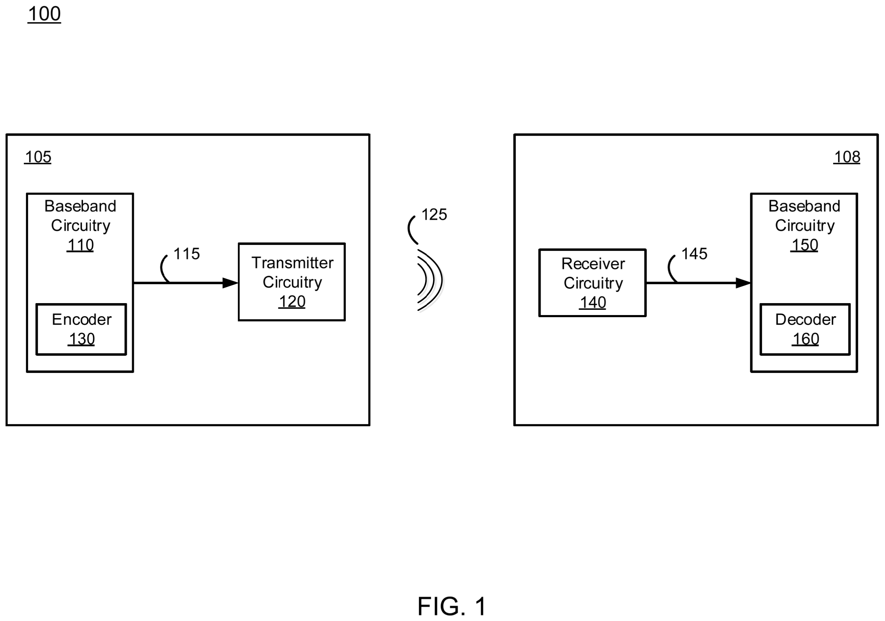

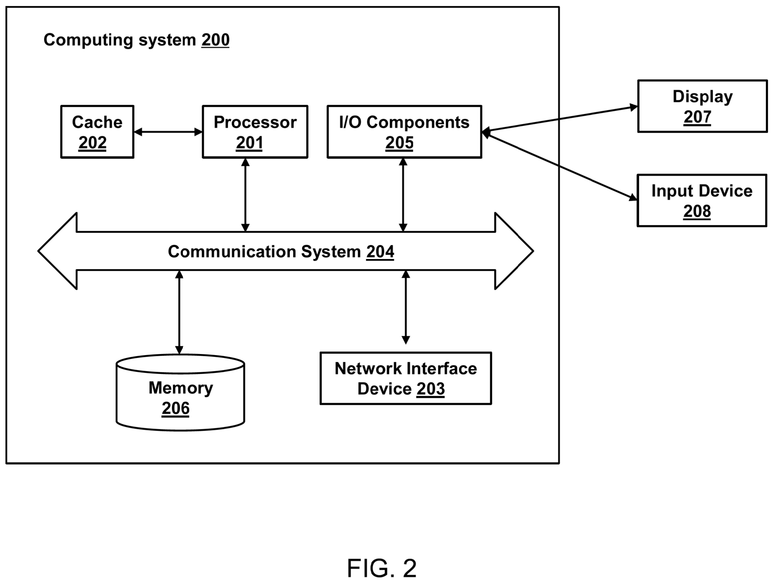

Referring to FIG. 1, illustrated is a diagram depicting an example communication environment 100 including communication systems (communication apparatuses or circuitry) 105, 108, according to one or more embodiments. In one embodiment, the communication system 105 includes a baseband circuitry 110 and a transmitter circuitry 120, and the communication system 108 includes a baseband circuitry 150 and a receiver circuitry 140. In one aspect, the communication system 105 is considered a transmitter communication system, and the communication system 108 is considered a receiver communication system. These components operate together to exchange data (e.g., messages or frames) through a wireless medium. These components are embodied as application specific integrated circuit (ASIC), field programmable gate array (FPGA), or any combination of these, in one or more embodiments. In some embodiments, the communication systems 105, 108 include more, fewer, or different components than shown in FIG. 1. For example, each of the communication systems 105, 108 includes transceiver circuitry to allow bi-directional communication between the communication systems 105, 108 or with other communication systems. In some embodiments, each of the communication systems 105, 108 may have configuration similar to that of a computing system 200 as shown in FIG. 2.

The baseband circuitry 110 of the communication system 105 is a circuitry that generates the baseband data 115 for transmission. The baseband data 115 includes information data (e.g., signal(s)) at a baseband frequency for transmission. In one approach, the baseband circuitry 110 includes an encoder 130 that encodes the data and generates or outputs parity bits. In one aspect, the baseband circuitry 110 (or encoder 130) obtains a generator matrix or a parity check matrix or uses a previously produced generator matrix or a previously produced parity check matrix and encodes the information data by applying the information data to the generator matrix or the parity check matrix to obtain a codeword. In some embodiments, the baseband circuitry 110 stores one or more generator matrices or one or more parity check matrices that conform to any IEEE 802.11 standard for WLAN communication. The baseband circuitry 110 retrieves the stored generator matrix or the stored parity check matrix in response to detecting information data to be transmitted, or in response to receiving an instruction to encode the information data. In one approach, the baseband circuitry 110 generates the parity bits according to a portion of the generator matrix or using the parity check matrix and appends the parity bits to the information bits to form a codeword. The baseband circuitry 110 generates the baseband data 115 including the codeword for the communication system 108 and provides the baseband data 115 to the transmitter circuitry 120.

The transmitter circuitry 120 of the communication system 105 includes or corresponds to a circuitry that receives the baseband data 115 from the baseband circuitry 110 and transmits a wireless signal 125 according to the baseband data 115. In one configuration, the transmitter circuitry 120 is coupled between the baseband circuitry 110 and an antenna (not shown). In this configuration, the transmitter circuitry 120 up-converts the baseband data 115 from the baseband circuitry 110 onto a carrier signal to generate the wireless signal 125 at an RF frequency (e.g., 10 MHz to 60 GHz), and transmits the wireless signal 125 through the antenna.

The receiver circuitry 140 of the communication system 108 is a circuitry that receives the wireless signal 125 from the communication system 105 and obtains baseband data 145 from the received wireless signal 125. In one configuration, the receiver circuitry 140 is coupled between the baseband circuitry 150 and an antenna (not shown). In this configuration, the receiver circuitry 140 receives the wireless signal 125 though an antenna, and down-converts the wireless signal 125 at an RF frequency according to a carrier signal to obtain the baseband data 145 from the wireless signal 125. The receiver circuitry 140 then provides the baseband data 145 to the baseband circuitry 150.

The baseband circuitry 150 of the communication system 108 includes or corresponds to a circuitry that receives the baseband data 145 from the receiver circuitry 140 and obtains information data from the received baseband data 145. In one embodiment, the baseband circuitry 150 includes a decoder 160 that extracts information and parity bits from the baseband data 145. The decoder 160 decodes the baseband data 145 to obtain the information data generated by the baseband circuitry 110 of the communication system 105.

In some embodiments, each of the baseband circuitry 110 (including the encoder 130), the transmitter circuitry 120, the receiver circuitry 140, and the baseband circuitry 150 (including the decoder 160) may be as one or more processors, application specific integrated circuit (ASIC), field programmable gate array (FPGA), or any combination of them.

FIG. 2 is a schematic block diagram of a computing system 200, that can be used to generate transmissions that are being transmitted via a wireless communication device, such as 105 or 108. An illustrated example computing system 200, also referred to as a computer system 200, can include one or more processors 201 in direct or indirect communication, via a communication system 204 (e.g., bus), with memory 206, at least one network interface controller 203 with network interface port for connection to a network (not shown), and other components, e.g., input/output ("I/O") components 205. Generally, the processor(s) 201 can execute instructions (e.g., computer code or programs) received from memory (e.g., 206 or 202). The processor(s) 201 illustrated can incorporate, or are connected to, cache memory 202. In some instances, instructions are read from memory 206 into cache memory 202 and executed by the processor(s) 201 from cache memory 202. The computing system 200 may not necessarily contain all of these components shown in FIG. 2 and may contain other components that are not shown in FIG. 2.

In more detail, the processor(s) 201 may be any logic circuitry that processes instructions, e.g., instructions fetched from the memory 206 or cache 202. In many implementations, the processor(s) 201 are microprocessor units or special purpose processors. The computing device 205 may be based on any processor, or set of processors, capable of operating as described herein. The processor(s) 201 may be single core or multi-core processor(s). The processor(s) 201 may be multiple distinct processors.

The memory 206 may be any device suitable for storing computer readable data. The memory 206 may be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray® discs). A computing system 200 may have any number of memory devices 206.

The cache memory 202 is generally a form of computer memory placed in close proximity to the processor(s) 201 for fast read times. In some implementations, the cache memory 202 is part of, or on the same chip as, the processor(s) 201. In some implementations, there are multiple levels of cache 202, e.g., L2 and L3 cache layers.

The network interface controller 203 manages data exchanges via the network interface (sometimes referred to as network interface ports). The network interface controller 203 handles the physical and data link layers of the OSI model for network communication. In some implementations, some of the network interface controller's tasks are handled by one or more of the processor(s) 201. In some implementations, the network interface controller 203 is part of a processor 201. In some implementations, the computing system 200 has multiple network interfaces controlled by a single controller 203. In some implementations, the computing system 200 has multiple network interface devices or controllers 203. In some implementations, each network interface is a connection point for a physical network link (e.g., a cat-5 Ethernet link). In some implementations, the network interface controller 203 supports wireless network connections and an interface port is a wireless (e.g., radio) receiver or transmitter (e.g., for any of the IEEE 802.11 protocols, near field communication "NFC", Bluetooth, ANT, or any other wireless protocol). In some implementations, the network interface controller 203 implements one or more network protocols such as Ethernet. Generally, a computing device 205 exchanges data with other computing devices via physical or wireless links through a network interface. The network interface may link directly to another device or to another device via an intermediary device, e.g., a network device such as a hub, a bridge, a switch, or a router, connecting the computing device 200 to a data network such as the Internet.

The computing system 200 may include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components may include an I/O interface, external serial device ports, and any additional co-processors. For example, a computing system 200 may include an interface (e.g., a universal serial bus (USB) interface) for connecting input devices, output devices, or additional memory devices (e.g., portable flash drive or external media drive). In some implementations, a computing device 200 includes an additional device such as a co-processor, e.g., a math co-processor can assist the processor 201 with high precision or complex calculations.

The components 209 may be configured to connect with external media, a display 207, an input device 208 or any other components in the computing system 200, or combinations thereof. The display 207 may be a liquid crystal display (LCD), an organic light emitting diode (OLED) display, a flat panel display, a solid state display, a cathode ray tube (CRT) display, a projector, a printer or other now known or later developed display device for outputting determined information. The display 207 may act as an interface for the user to see the functioning of the processor(s) 201, or specifically as an interface with the software stored in the memory 206.

The input device 208 may be configured to allow a user to interact with any of the components of the computing system 200. The input device 208 may be a plurality pad, a keyboard, a cursor control device, such as a mouse, or a joystick. Also, the input device 208 may be a remote control, touchscreen display (which may be a combination of the display 207 and the input device 208), or any other device operative to interact with the computing system 200, such as any device operative to act as an interface between a user and the computing system 200.

## B. Baseband Interference Cancellation

The technical solutions of this disclosure provide an improved performance of concurrent multiband radio communications when a receiver of a first band receives a signal (e.g., a signal-of-interest, also referred to as an SOI) at a first channel of a first band, while concurrently a co-located transmitter of a second band transmits at a second channel of a second band a transmission signal causing adjacent channel interference (ACI) that interferes with the SOI reception. The technical solutions can include circuitry configured to include transceivers arranged in configurations in which separate antennas are used for transmission and receiving transceivers. Depending on the configuration, the baseband interference cancellation can cooperate with coexistence filters for non-shared antenna architecture and duplexer for shared antenna architecture. Such implementations of the technical solutions can increase ACI to SOI isolation which can be used to increase the power and consequently the dynamic range of the transmission signal, reduce coexistence filter cost and allowing antenna sharing.

The interfering signal (e.g., ACI) at power amplifier's output can be down converted to a baseband (or another carrier frequency) according to the channel of the received signal (e.g., SOI channel). Following equalization, this signal can be input or fed into a demodulator for removal, attenuation or cancellation of the interference which appears on SOI baseband. Some types of coexistence filters (e.g., film-bulk acoustic wave resonator or FBAR) can suffer thermal product mixing and the frequency response can be a function of intermittent envelope signal power which can include a time dependent response. This can incur losses for a conventional cancellation equalizer used to remove ACI's interference in a multiband operation. The solutions of this disclosure can include a dynamic model for the filter response that can be used for accurate equalization and interference cancellation. The solutions can be extendable for multi antenna applications where each band uses multiple antennas. The solutions can combine radio and baseband algorithms to improve dynamic range and reduce system cost. The solutions can be utilized in multiband access circuits or devices (e.g., chips) that integrate multiple bands (e.g., 5 GHz and 6 GHz Wi-Fi bands, or any other adjacent wireless communication bands), which can be useful as the access chip roadmap is shifting from single band chips to multiband in a single chip. The solutions can be related to mobility chips if full multi-link operation (MLO) is implemented, including in system or physical layer of the design.

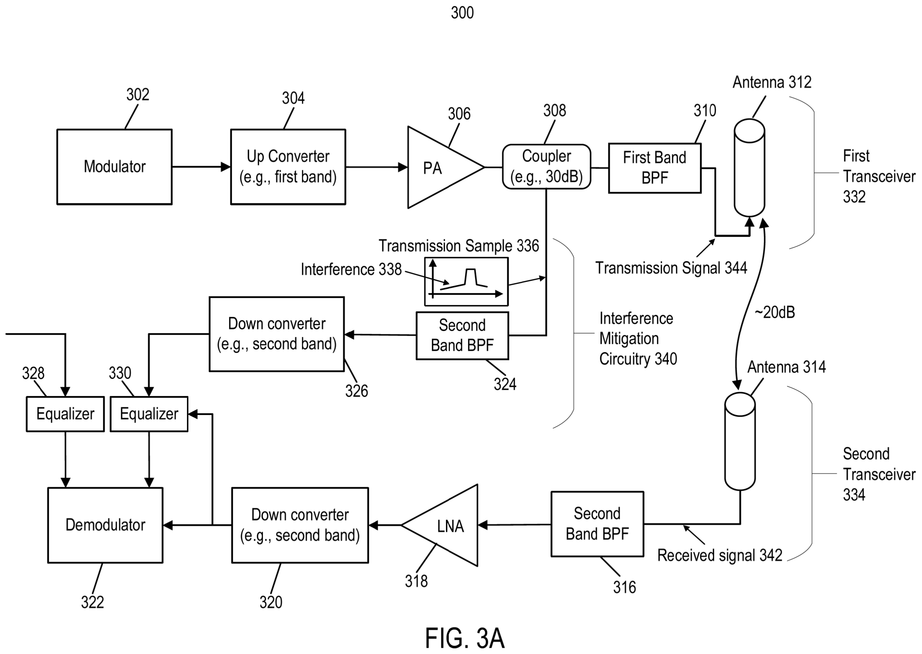

FIG. 3A is an example system circuitry 300 for providing interference mitigation for a multiband wireless communication system implemented in a dual transceiver configuration with dedicated transceiver antennas. The example system circuitry 300 can include a first transceiver 332 configured for wireless communications via a first band (e.g., a first one of a 5 GHz or a 6 GH Wi-Fi band) and a second transceiver 334 configured for wireless communications via a second band (e.g., a remaining one of the 5 GHz or the 6 GHz). The first transceiver can include a modulator 302, an up converter 304, a power amplifier (PA) 306, a coupler 308, a band pass filter (BPF) 310 for a dedicated (e.g., first) wireless band, and an antenna 312 to transmit the transmission signal 344 at a first band. The second transceiver 334 can include a demodulator 322, a down converter 320, a low noise amplifier 318, a second band pass filter 316 and an antenna 314 to receive a received signal 342 at a second band.

The transmission signal 344 of the first transceiver 332 can be offset from and adjacent to the second band at which the received signal 342 is received. For instance, a first one of the transmission signal 344 or the received signal 342 can be at 5 GHz Wi-Fi band, while the remaining one of the two signals (e.g., 344 or 342) can be set at 6 GHz Wi-Fi band. However, the difference in power between the transmission signal 344 of the first transceiver 332 and the received signal 342 of the second transceiver 334 can be substantial, such that the transmission signal 344 can be about 100dB more powerful than the received signal 342. Due to such a disparity in power between the transmission signal 344 and the received signal 342, a tail portion of the interference of the transmission signal 344 can overlap with the second band of the received signal 342 at a sufficiently high strength level with respect to the strength of the received signal 342 to interfere with the received signal 342 at the second transceiver 334.

To remove or reduce such interference from the received signal 342, the example system circuitry 300 can include an interference mitigation circuitry 340. The interference mitigation circuitry 340 can be coupled with the first transceiver 332 (e.g., via a coupler 308) and with the second transceiver 334 (e.g., via the demodulator 322). The interference mitigation circuitry 340 configured to mitigate the interference from the transmission to reduce or cancel its impact at the received signal 342, including the tail end of the transmission. The interference mitigation circuitry 340 can receive a transmission sample 336 of the transmission signal 344 from the coupler 308 of the first transceiver 332. The transmission sample 336 can include a sample of the interference 338 that can include a central portion of the interference and a tail end portion that can extend in frequency over the band of the received signal 342. The transmission sample 336 can be input into a second BPF 324 that can filter the signals at the frequency range of the first band to remove the central portion of the interference 338. The signal output from the second BPF 324 can be input into a down converter 326 to down convert the carrier frequency of the filtered sample signal. The down converter 326 can remove the carrier frequency to bring the signal to baseband or transform the carrier frequency into a different carrier frequency (e.g., the carrier frequency of the second band of the received signal). The output from the down converter 326 can be input into an equalizer 330, where the signal can be adjusted into a signal that can be subtracted from the received signal 342 at the demodulator 322 of the second transceiver 334 to produce a second transceiver 334 signal with the interference removed or reduced. In the instances in which another interference from a third transceiver is also removed from the second transceiver 334 at the demodulator 332, another similarly filtered, down converted signal can be input into another equalizer 328 to adjust the demodulator 322 to remove that second interfering signal, as well.

The example system circuitry 300 can be used for interference cancellation for 5 GHz or 6 GHz bands coexistence involving separated antennas (e.g., 312 and 314). The first and the second transceivers (e.g., 332 and 334) can operate concurrently. The interference mitigation circuitry 340 can provide an analog loopback for the tail end of the interference (e.g., out-of-band noise or OOB skirt) which can overlap with and interfere with the 5G received signal 342 (e.g., the signal of interest, or SOI). A 5G band pass filter (e.g., 324) can be used to reject the main 6G transmission in-band (Tx blocker or central portion) signal which can be an adjacent channel interfering (ACI) for the 5G SOI. This BPF (e.g., 324) can protect the received down converter 326 from compression. The resulted baseband signal output from the down converter 326 can be input or fed into the equalizer 330 and then to the demodulator for interference reduction or cancellation.

The demodulator 322 can subtract equalized interfering signal (e.g., output from the equalizer 330) from the main 5 GHz received signal 342. The equalizer 330 can be trained to converge the signal to the frequency response difference of the two responses. The first response can be a response from the power amplified output and the Rx 5 GHz down converter output, and the second response can be from the power amplified output to the 5 GHz down converter output. In practice, this can correspond to (e.g., be same as or approximately close to) the overall concatenated response 6G (e.g., 6 GHz) and 5G (e.g., 5 GHz) coexistence filters at SOI (e.g., received) channel. For multi antenna applications, N antennas can be contributing to the interference and the problem becomes multiple input signal output (MISO) N:1 where each receiving path can be used to cancel N interferences. Assuming a similar sampling path (e.g., interference mitigation circuitry 340) is available for each interfering path, it can be shared among all receiving paths. In such instances, additional equalizers (e.g., 330, 328) can be used for interference compensation such that each demodulator (e.g., 322) can have N separate equalizers associated, where each equalizer can stand for Tx and Rx coexistence filter couple. In an example involving T1...T4 being Tx coexistence filters for 4 antennas and R1...R4 correspond to 4 Rx being coexistence filters, there can be 16 couples: T1R1, T1R2... T4R4 . Receiver n can host 4 equalizers to compensate for T1Rn, T2Rn, T3Rn and T4Rn.

The first transceiver 332, also referred to as the transmitting transceiver, can include any type of a wireless communication transceiver designed to transmit signals across designated frequency bands. The first transceiver 332 can be configured to include various components that are configured (e.g., arranged and interconnected) to modulate, amplify, and transmit signals. For example, the first transceiver 332 can be configured to operate in the 5 GHz or 6 GHz Wi-Fi bands, allowing it to handle multiple communication protocols. The first transceiver 332 can include a modulator 302 for encoding data onto a carrier signal, an up converter 304 for adjusting the frequency of the signal for transmission, and a power amplifier 306 to boost the signal strength before it is sent out through an antenna. The first transceiver 332 can include a coupler 308 to receive the signal from power amplifier 306 and provide an output to the first band BPF 310 for filtering before transmission via the antenna 312, as well as provide a sample of the transmission signal (e.g., transmission sample 336) for processing by the interference mitigation circuitry 340.

Modulator 302 can include any type of circuit that converts baseband signals into modulated radio frequency signals suitable for transmission. Modulator 302 can be, or include, a baseband modulator converting baseband signals into higher frequency signals. Modulator 302 can be configured to encode data or information onto a carrier wave, allowing for effective signal transmission over wireless channels. For instance, modulator 302 can utilize techniques such as amplitude modulation (AM), frequency modulation (FM), or phase modulation (PM) to prepare the data signal for further processing (e.g. up conversion and amplification). Modulator 302 can adjust the characteristics of the carrier wave according to the input data. This can facilitate the transmitted signal to be demodulated by the receiving transceiver at the receiving device (e.g., across the Wi-Fi link).

Up converter 304 can include any circuit that shifts the frequency of a baseband signal to a higher frequency suitable for transmission. Up converter 304 can prepare the output signals from the modulator 302 for effective transmission over wireless communication bands. For example, up converter 304 can take a modulated signal from modulator 302 and convert that signal from a lower frequency range to a frequency range that falls within the operational band of the intended band (e.g., first band of the transmission signal 344, such as 5 GHz or 6 GHz). Up converter 304 can mix the baseband signal with a local oscillator signal to produce an output at a higher frequency that can be amplified, filtered and then transmitted via an antenna 312.

Power Amplifier (PA) 306 can include any circuit or a device configured to increase the power level of a radio frequency signal, such as the signal output from the up converter 304. PA 306 can increase the power of the signal to provide it with sufficient strength to reach its intended destination, upon transmission via the antenna 312, without significant degradation at the receiving device. For instance, PA 306 can amplify the output from up converter 304, boosting this signal power to meet predetermined set power levels (e.g., regulatory requirements) or to overcome losses in the transmission medium. PA 306 can utilize various amplification techniques, such as linear or non-linear amplification, to providing performance across different operating conditions, depending on the design.

Coupler 308 can include any circuit or a device configured to split or combine signals within a transmission path without significantly affecting their power levels. Coupler 308 can be a circuit configured to generate or split off, from the transmission signal 344 output from the power amplifier, a transmission sample 336 signal that can be 20 or 30 dB less powerful than the transmission signal 344. The coupler 308 can be configured to split off the transmission sample 336 without impacting the signal integrity of the transmission signal 344. For example, coupler 308 can take the amplified transmission signal from PA 306 and provide a sample to interference mitigation circuitry while allowing the main signal to proceed to bandpass filter BPF 310, and from there be transmitted via the antenna 312. While coupler 308 in the example system 100 is illustrates to be located between the PA 306 and the first band BPF 310, depending on the design, the coupler 308 can be provided at any other location in the first transceiver 332, such as following the first band BPF 310 and preceding the antenna 312, prior to the PA 306, or at any other location.

First band BPF 310 can include any filter designed to allow a frequency range of signals to pass through while attenuating signals outside this range. The first band BPF 310 can include a band pass filter or a combination of a low pass and a high pass filter, which can be set to a particular band range (e.g., first band of the transmission signal) thereby removing all other signals outside the designated band. For instance, the first band BPF 310 can be configured to pass frequencies within the designated band (e.g., 5 GHz when the first band is 5 GHz Wi-Fi band) while rejecting out-of-band interference that can degrade performance. This can improve the signal integrity before the transmission signal 344 is transmitted from the first transceiver 332 via the antenna 312.

Antenna 312 can include any structure or component designed to radiate (e.g., transmit) or receive electromagnetic waves in wireless communication systems. Antenna 312 can function as an interface between free space (e.g., air) and the electronic components of the first transceiver 332. For example, antenna 312 can be designed for operation at one or more bands, such as the 5 GHz or the 6 GHz band. The antenna 312 can be configured to optimize its radiation pattern and gain characteristics for specific one or more frequency ranges or bands.

Second transceiver 334, also referred to as the receiving transceiver, can include any type of a wireless communication transceiver designed to receive signals across designated frequency bands. For instance, the second transceiver 334 can be a transceiver configured to receive signals over a second band that is adjacent to a first band over which the first transceiver 332 can simultaneously or concurrently transmit transmission signals 344. The second transceiver 334 can include various subcomponents that work together to demodulate incoming signals and process them for further use. For instance, second transceiver 334 can operate in conjunction with first transceiver 332 by receiving signals within a neighboring band (e.g., at 5 GHz while first transceiver operates at 6 GHz) or by operating at 6 GHz while the first transceiver operates at 5 GHz. Depending on the configuration, the second transceiver 334 can include any functionality of the first transceiver 332, and vice versa.

Antenna 314 can include any structure of component designed to radiate or receive receiving electromagnetic waves in a wireless communication system. Antenna 314 can be configured to operate as an interface between incoming radio signals and electronic components within second transceiver 334. For example, antenna 314 can be optimized for operation at frequencies around the second band (e.g., 5 GHz or 6 GHz, depending on the band at which the first antenna 312 operates). Antenna 314 can be configured (e.g., shaped) to capture incoming signals while minimizing losses due to reflection or absorption. Depending on the configuration, antenna 314 can include any functionality of antenna 312, and vice versa.

Second band BPF 316 can include any filter (e.g., band pass filter) configured to isolate and pass only those frequencies relevant to its operational band while rejecting signal components outside this range. Second band BPF 316 can be configured to operate at the second band (e.g., different from the first band at which the first band BPF 310 filters). The second band BPF 316 can be configured as a band pass filter allowing only desired incoming signals to proceed for processing by second transceiver 334, and filtering signals outside of it. For instance, BPF 316 can be configured to allow frequencies around the second band (e.g., approximately at 5 GHz) while attenuating out-of-band noise that could interfere with reception quality. Depending on the configuration, the second band BPF 316 can include any functionality of the first band BPF 310, and vice versa.

Low noise amplifier (LNA) 318 can include any circuit or device configured to amplify weak incoming radio frequency signals while limiting the amount of additional noise introduced into the system. The LNA 318 can be configured to enhance the strength of the received signal 324 before further processing by the down converter 320 and the demodulator 322 of the second transceiver 334. For example, LNA 318 can amplify signals captured by antenna 314 after they pass through second band BPF 316, preserving that even weak signals are sufficiently boosted for demodulation by subsequent components. Depending on the configuration, the LNA 318 can include any functionality of a PA 306, and vice versa.

Down converter 320 can include any circuit that transforms high-frequency received signals into lower-frequency baseband signals suitable for processing by digital systems. Down converter 320 can prepare amplified incoming signals from LNA 318 for demodulation within the second transceiver 334. For instance, down converter 320 can take amplified RF signals and mix them with a local oscillator frequency to produce intermediate frequencies or baseband outputs that can be more convenient to process, or that can be configured for the demodulator 322. Depending on the configuration, down converter 320 can include any functionality of the down converter 326, and vice versa.

Demodulator 322 can include any circuit or device responsible for extracting original information from modulated carrier waves received by second transceiver 334. Demodulator 322 component can be configured to convert processed RF signals back into usable baseband data formats after down conversion occurs via down converter 320. For example, demodulator 322 can take output from down converter 320 and decode it according to modulation schemes used during transmission (e.g., QAM or PSK). The demodulator 322 can utilize outputs from equalizer 330 or 328 to adjust the received signal 342 according to signals output from the equalizers 330 or 328 to produce an output received signal that is free from any interference 338.

Interference mitigation circuitry 340 can include any circuitry or device configured to reduce or eliminate interference from transmission signal 334 impacting the received signal 342 within the wireless communication device. Interference mitigation circuitry 340 circuitry can facilitate improving the overall system performance by removing interfering signals and improving signal coexistence. For instance, interference mitigation circuitry 340 can utilize techniques such as adaptive filtering or cancellation algorithms based on samples taken from transmission paths. These samples can be filtered and down converted and utilized as inputs to equalizers which can be adaptively tuned to produce signals that can be subtracted or combined with the signals of, or within the demodulator 322, to produce the received signal that has its interference from the transmitting transceiver removed or attenuated.

Transmission Sample 336 can include any sample, copy or representation of a portion of transmitted RF signal (e.g., transmission signal 344) that can be used for monitoring or processing within interference mitigation circuitry 340. This sample serves as a reference point against which incoming received signals are compared to identify interference characteristics accurately. For example, transmission sample 336 can capture both central portions and tail end portions of the transmitted signals as they propagate through space before reaching receiving antennas like antenna 314.

Interference 338 can include any unwanted or undesirable signal or noise that can overlap with, disrupt or degrade the received signal 342. Interference 338 can form or appear when strong transmitted signals 344 overlap with weaker received signals 342. Interference 338 can be formed or appear at least in part due to proximity in frequency bands or spatial positioning relative to antennas involved in transmission or reception processes. For example, interference 338 can manifest as tail portions extending from powerful transmission signals 344 impacting weaker incoming data streams at the second transceiver 334. Understanding features or characteristics associated with such interference (e.g., by equalizer 330) can allow for interference mitigation.

Second band BPF 324 can include any filter (e.g., band pass filter) configured to isolate desired frequencies around a secondary operational band while rejecting others outside such a frequency range during processing stages within interference mitigation circuitry 340. The second band BPF 324 can facilitate that relevant portions of sampled transmission data are utilized effectively when mitigating interference effects on received communications streams at demodulator 322. For instance, second band BPF 324 can filter out undesirable or irrelevant noise signals present alongside transmission sample 336 via coupler 308. Depending on the configuration, the second band BPF 324 can include any functionality of a first band BPF 310 or second band BPF 316, and vice versa.

Down converter 326 can include any circuit configured with transforming higher-frequency sampled RF transmissions into lower-frequency formats suitable for subsequent processing stages within interference mitigation circuitry 340. The down converter 326 can serve as an intermediary step between filtered transmission samples 336 obtained from second band BPF 324 and final adjustments made prior to subtraction of the output signals against incoming received data signals 324 at demodulator 322. For example, down converter 326 can mix filtered transmission sample 336 with local oscillator frequencies aimed at producing intermediate output conducive toward accurate equalization efforts at the equalizer 330.

Equalizer 330 can include any device responsible for adjusting amplitude and phase characteristics associated with sampled transmissions prior subtraction against incoming received data streams during demodulation processes occurring at second transceiver 334. This component plays an integral role in refining overall reception quality by compensating distortions introduced through various channels along which RF communications travel prior reaching their final destinations-such as antennas involved earlier stages like those found within first transceiver configurations discussed previously herein-thus enhancing clarity throughout entire systems involved therein. For instance, equalizer 330 can utilize adaptive algorithms based upon real-time analyses conducted upon filtered outputs generated earlier via down converters 326, ensuring optimal performance remains consistent even amidst challenging environmental factors affecting wireless networks. For instance, equalizer 330 can utilize a linear and nonlinear function or model to overcome nonlinearities appear in BPF as well as any other related component in the Tx, Rx or sampling path.

Equalizer 330 can include any circuit or device configured to adjust the amplitude and phase characteristics of sampled transmissions prior to their subtraction against incoming received signals 342 at demodulator 322. Equalizer 330 can refine reception quality by compensating for distortions introduced during signal transmission. The equalizer can include a processor or a digital processing circuitry that can include input parameters that can be used (e.g., manipulated or controlled) for adjusting the output signal of the down converter 326 to match the interference of the transmission sample, which can produce an output signal that can then be used to subtract or remove the interference (e.g., tail end interference) from the baseband version of the received signal at the demodulator 322.

The equalizer 330 can utilize adaptive algorithms based on real-time analyses of filtered outputs from down converter 326. The equalizer 328 can include a circuit similar in function but tailored specifically toward addressing additional interfering signals encountered during reception phases occurring at demodulator 322. The equalizer 328 can work together with equalizer 330 to focus primarily upon refining adjustments made against secondary sources (e.g., any other transmitting transceivers) contributing unwanted. For example, the equalizer 328 can utilize distinct adaptive algorithms aimed toward identifying specific characteristics associated with particular types of interferences encountered regularly across diverse applications. The equalizers 330 or 328 can adaptively (e.g., based on feedback signals) adjust its parameters to adjust or fine tune the impact of interference and enhance overall communication clarity within the wireless system.

Training and tracking of equalizers (e.g., 330, 328) can be used to improve the performance of the system in dynamic implementations. Training can be accomplished using a least squares (LS) solver, in which the received signal 342 (e.g., the signal of interest or SOI) may not be present at the receiver input during training. However, if the SOI exists, the equalizer 330 can be treated as additive noise, potentially increasing the number of training samples needed to reject SOI noise for accurate equalizer calibration. The interference channel can be generally static, allowing for long-term tracking based on either a new LS procedure or an on-the-fly least mean squares (LMS) approach. This capability can help facilitate the equalizer 330 to be effective even as conditions change.

Equalizers (e.g., 330, 328) can compensate for variations in receiver automatic gain control (AGC). The receiver path can include AGC to manage the dynamic range of received signal strength indicators (RSSI). If equalizer training occurs at a specific receiver gain $G_0$ and the gain changes to $G_1$ during SOI reception, the equalizer gain can be adjusted according to the gain factor $G_1/G_0$. This adjustment can support maintaining optimal performance so that the equalizer effectively compensates for any changes in the signal strength throughout the reception process. Equalizers can include parameters that control frequency, phase, amplitude, signal strength or any other parameters and these parameters can be adjusted to control such output adjustments.

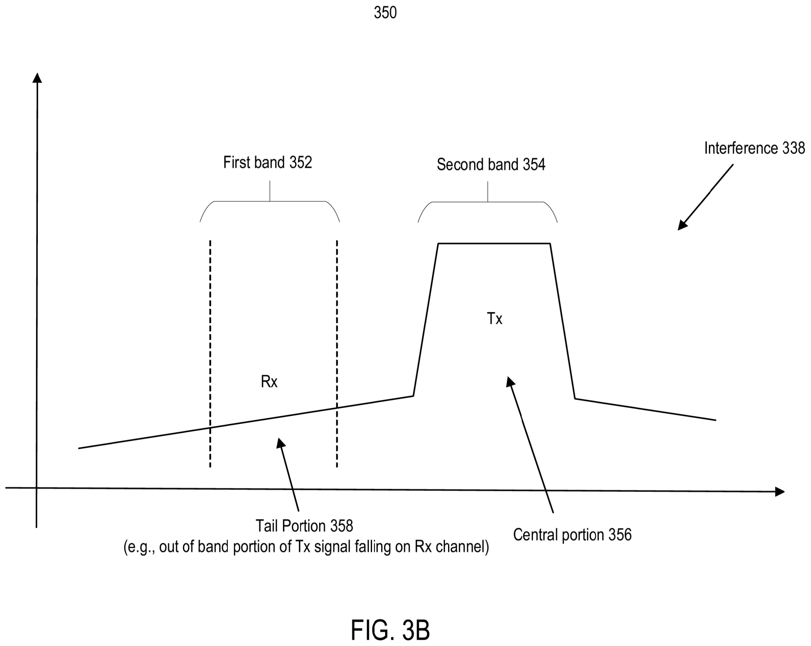

FIG. 3B illustrates an example plot 350 of an interference signal having a central portion 356 of the interference and a tail portion 358 of the interference plotted over a frequency range. The interference can include any disruption or alteration of a signal (e.g., received signal 342) caused by the presence of unwanted transmission signal 344 (e.g., or noise), leading potentially to a distortion in communication system. Example plot 350 can include an X-axis corresponding to frequency of a signal and a Y-axis corresponding to signal strength (e.g., dB). The first band 352 can correspond to the frequency band (e.g., channel) of the received signal 342. The second band 354 can correspond to the frequency band (e.g., channel) of the transmission signal 344 or its central portion 356.

The plot 350 can correspond to the interference 338 that can be reflective of the transmission signal 344, which can interfere with the received signal 342. The interference 338 can include the central portion 356 of the interference having a peak of the signal strength. The interference 338 can include a tail portion 358, which can include the portion of the interference preceding or following the central portion 356 and can be characterized by a gradual decrease in amplitude or strength, nevertheless contributing to interference or distortion. For example, the tail portion 358 can include a reduced and gradually tapering signal strength away from the central portion 356, extending towards, into, or through the first band 352 of the received signal, impacting received signal quality. While a filter can be used to remove or filter out the central portion 356 of the signal (e.g., in the interference mitigation circuitry 340), for example, a BPF 324, 316, or some other filter, a tail portion 358 can remain and still impact the first (e.g., received) signal 342.

The tail portion 358 of the interference, also referred to as the out of band (OOB) portion can remain in the signal following the transmission sample signal filtering. This tail portion 358 (e.g., the OOB portion of the signal interference) can be removed, using for example, the filtered a down converted (e.g., by 326) signal that is fed into the equalizer 330. The equalizer 330 can utilize this input signal along with the feedback signals from the receiver to fine tune or adjust its parameters controlling the equalizer output. Based on the feedback signals, the equalizer 330 can adjust the equalizer output signal to be combined with the received signal 342 at the demodulator 322 such that it matches the interference, allowing the demodulator 322 to remove or reduce the tail portion 358 (e.g., OOB portion) of the interference 338, from the received signal 342.

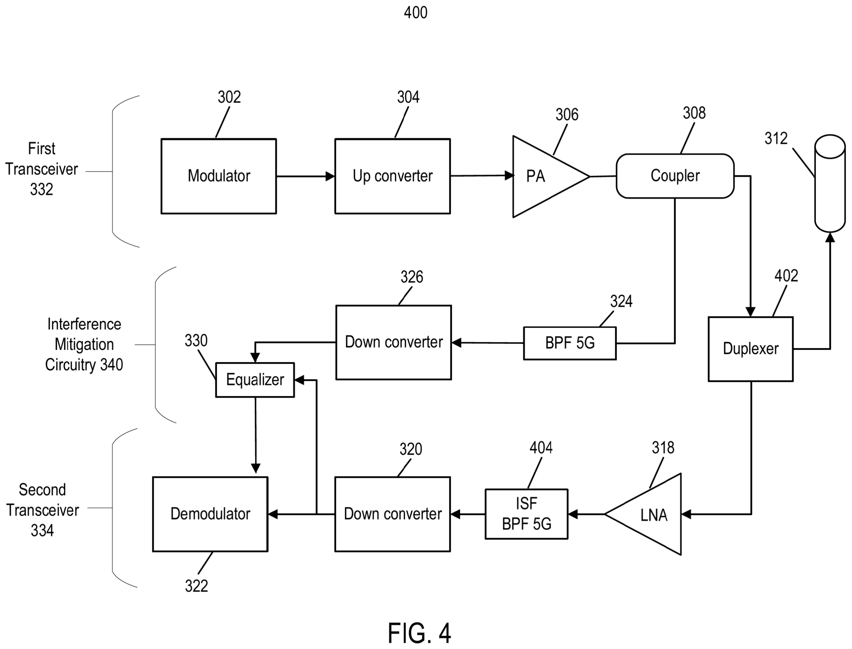

FIG. 4 illustrates an example system circuitry 400 for providing interference mitigation for a multiband wireless communication system implemented in configuration with a shared multi-band antenna. Example system 400 can include various components of the first transceiver 332 and the second transceiver 334 which are coupled with the interference mitigation circuitry 340 as in example system circuitry 300. However, unlike in example system circuitry 300, the example system 400 is configured to couple the first transceiver 332 and the second transceiver 334 coupled via a duplexer 402 to communicate via a single shared antenna 312.

First transceiver 332 can include a modulator 302, an up converter 304, a power amplifier 306 and a coupler 308. The modulator 302 can modulate the signal and produce an output that can be input into the up converter 304 for establishing a carrier frequency of the band or channel of the first transceiver 332. The output from the up converter 304 can be input into a power amplifier 306 for strengthening the signal, which can then be coupled into a coupler 308. The coupler 308 of the first transceiver 332 can provide two outputs, the first one leading into a duplexer 402 for transmission of the signal via antenna 312, and the second one (e.g., the transmission sample 336 signal) leading into the BPF 324 of the interference mitigation circuitry 340.

The second transceiver 334 can include an LNA 318 that can receive its incoming received signal from the duplexer 402, receiving the received signal from the shared antenna 312. The LNA 318 can amplify the received signal 342 can provide an output (e.g., amplified received signal) that can be input into the inter-system frequency (ISF) band pass filter (BPF) 404 of the second transceiver 334. The output of the ISF BPF 404 can be input into the down converter 320, the output of which can be provided both to the demodulator 322 of the second transceiver 334 and to the equalizer 330 of the interference mitigation circuitry 340 to adjusting or tuning the equalizer 330 to provide output for removing the tail end (e.g., out of band) interference from the received signal 342.

The interference mitigation circuitry 340 can include a BPF 324 that can receive the transmission sample 336 from the coupler 308. The BPF 324 can filter out all the signals outside of the predetermined signal range. The BPF 324 output can be input into the down converter 326 to provide a filtered and down converted (e.g., baseband or set to a different carrier frequency) signal. For example, such a baseband down converted signal can be input into the equalizer 330. The equalizer 330 can receive down converted output from the down converter 320 of the second transceiver 334 to provide or generate an output signal, based on which the interference signal can be removed from the received signal (e.g.., the SOI) at the demodulator 322.

The antenna 312 can include any functionalities of the antenna 312 or 314 from example system circuitry 300 of FIG. 3A. The antenna 312 can be configured to support both, the transmissions and the receiving of the signals for the first transceiver 332 and the second transceiver 334. The antenna 312 can include one or more individual antennas that can be coupled with the first and the second transceivers (e.g., 332 and 334) via one or more duplexers 402.

Duplexer 402 can include any circuitry or electronic device configured to provide bi-directional communication over a single path, allowing simultaneous transmission and reception of signals via the antenna 312. Duplexer 402 can provide isolation of the receiver from the transmitter while allowing both transceivers to share a common antenna. Duplexer 402 can separate transmit and receive signals based on their direction, managing frequency bands to prevent interference. In frequency division duplex (FDD) systems, duplexers can use filters to maintain that the transmitter's output does not overwhelm the receiver's input, maintaining signal integrity.

Inter-System Filter Band Pass Filter (ISF BPF) 404 can include any circuit, component or electronic device for allowing specific frequency ranges to pass while attenuating frequencies outside that range. This ISF BFP 404 can be used in multi-band configuration of the system 400 to facilitate management of interference so that signals from various sources do not overlap undesirably. By selectively filtering out unwanted frequencies, the ISF BPF 404 can improve signal integrity and clarity, making it particularly valuable in environments where multiple communication protocols operate simultaneously.

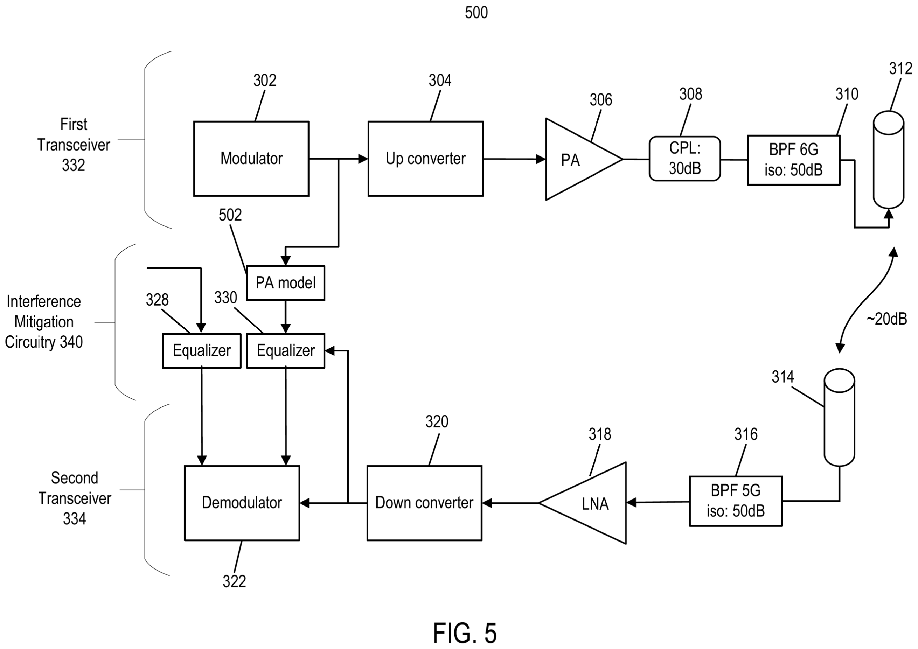

FIG. 5 illustrates an example system circuitry 500 for providing interference mitigation for a multiband wireless communication system implemented in configuration with a power amplifier model. The example system circuitry 500 can include a first transceiver 332 comprising a modulator 302, up converter 304, PA 306, coupler 308 and BPF 310 coupled with antenna 312 as described in connection with example system circuitry 300 in FIG. 3A. Also as described in FIG. 3A, the example system circuitry 500 can include a second transceiver 334 having an antenna 314, a BPF 318, an LNA 318, a down converter 320 and a demodulator 322.

The example system circuitry 500 can include an interference mitigation circuitry 340 including a power amplifier (PA) model 502 that can receive an input signal from the modulator 302 of the first transceiver 332 and model that signal to estimate, generate or determine the output signal to provide to the equalizer 330, which can then be used by the equalizer 330 to provide the signal to be used for removal of the interference from the received signal at the second transceiver 334.

The Power Amplifier (PA) model 502 can include any circuit or a device configured to estimate or accurately represent the behavior of the up converter 304 and power amplifier 306 with respect to the interference signal generated by the first transceiver 332. The PA model 502 can include any device or circuitry (e.g., processor circuit or a processing device) providing or determining nonlinear characteristics and dynamic responses of the PA, which can be used to predict how the first transceiver 322 and its components (e.g., up converter 304, PA 306, coupler 308 or BPF 310) may perform under various input conditions. The PA model 502 can include the functionalities for generating, from the output of the modulator 302, signal corresponding to the out of band (OOB) or tail end of the interference at baseband or a given carrier frequency. This signal can be input into the equalizer 330 to generate the signal for removing the tail end (e.g., OOB) interference from the received signal at the demodulator of the second (e.g., receiving) transceiver 334.

In some systems a DPD can be used to mitigate PA distortion. The PA model 502 can include features such as digital predistortion (DPD), or the combined PA 306 and DPD response to counteract distortion effects that arise at high power levels. For instance, in a multi-band system configuration, the PA model 502 can receive input signals from modulators and estimates the output signal, which can be then utilized by equalizers for interference mitigation. The PA model 502 can function by analyzing input-output relationships through techniques like least squares (LS) fitting, enabling it to adapt to changes in operating conditions and optimize performance.

The PA model 502 can be configured to receive input from a modulator 302, or any other portion of the transmitting transceiver, and generates an estimated output signal that feeds into an equalizer 330. This process can aid in baseband interference mitigation by providing a reference for removing unwanted signals from received data. The PA model 502 can operate when integrated with coexistence filters, allowing that the system can manage multiple frequency bands without degradation of performance. By employing techniques like least squares (LS) training and tracking, the PA model 502 can adapt to changes in operating conditions, enhancing its accuracy and reliability.

The transmission OOB (e.g., transmission tail end interference) generated by the PA model 502 can include, or be based on, additive white gaussian noise (AWGN) and nonlinear products of the transmission signal. At high transmission power level, the tail end interference signal (e.g., the OOB skirt) can be dominated by the nonlinear products of the transmission. The PA model 502 includes a nonlinear model that can be configured to operate with or without the presence of DPD (digital pre distortion), and it can be applied on the digital transmission (Tx) baseband signal to estimate Tx OOB skirt (e.g., tail end interference) for the cancellation replacing the analog down conversion path (e.g., the BGP 5G and Rx down converter of the interference mitigation circuitry 340).

The equalizer 330 can be configured to include, be subject to, or provide equalizer training and tracking. The training of the equalizer 330 can be done using, for example, least square (LS) solver. The LS solver can include a computational tool or algorithm that can be implemented in a processor to solve linear least squares problems, which can include finding the best-fitting solution to a system of linear equations by minimizing the sum of the squares of the residuals between observed and predicted values. For example, the best performance received signal 342 (e.g., SOI) may not appear at receiver input during training. For instance, even if SOI does exist training can be accomplished. SOI can be considered as additive noise for the training thus it may increase number of training samples to reject SOI noise for proper equalizer accuracy. The interference channel can be static and tracking can be done on a long term basis. Tracking can be based on a new LS procedure or using on the fly LMS.

The receiver path (e.g., second transceiver 334) can include automatic gain control (AGC), which can be used to compensate for received signal strength indicator (RSSI) dynamic range. Assuming equalizer 330 or 328 training is implemented at particular receiver (Rx) gain of $G_0$, and assuming Rx gain is changed during SOI reception to gain of G1 following training, the equalizer gain can be tuned according to the gain factor of G1/G0.

The filters utilized can be nonlinear or exhibit nonlinear properties. For instance, with respect to the thermal mixing product, due to the output of the PA 306, transmission (Tx) coexistence filter can incur nonlinearities such as thermal mixing product that can exist in FBAR filters. This can cause the filter to shift frequency response according to the intermittent signal's power envelope.

The following expression can describe or model such frequency as follows:

$$H(\omega + \omega 0(t)), \ \ \omega 0(t) = k \cdot LPF\{|x(t)|^{\wedge}2\}.$$

In the above expression, $H(\omega)$ can represent the nominal linear FBAR response at low power, $\omega 0(t)$ can represent the frequency shift caused by thermal mixing product, x(t) can be the signal driving the filter and the LPF can be a Low Pass Filter (e.g., cutoff ~10MHz)

Following training at low to medium ACI power $H(\omega)$ can be obtained as the linear response. With respect to the model parameters, such as K and LPF, their cutoff can be trained at high to maximal ACI power.

With respect to the impedance mismatch, the PA impedance can depend on average and intermittent envelope power. The Tx coexistence filter (e.g., BPF 310) can be tied to the PA, up to low insertion loss (IL) coupler, and response can be time-dependent and a linear time invariant (LTI) equalizer can show losses. This non-LTI response can be modeled and trained for accurate cancellation.

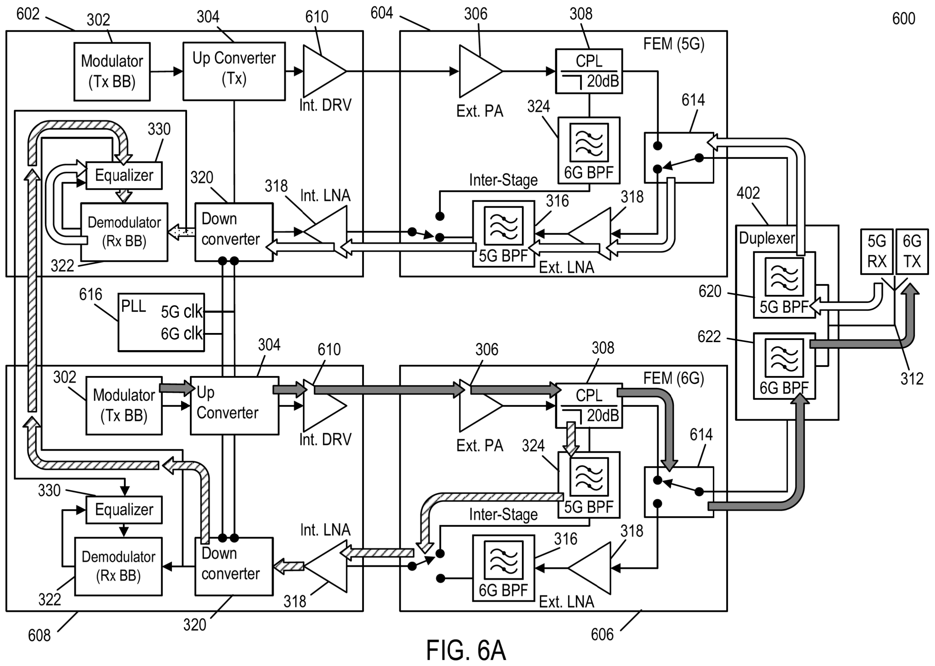

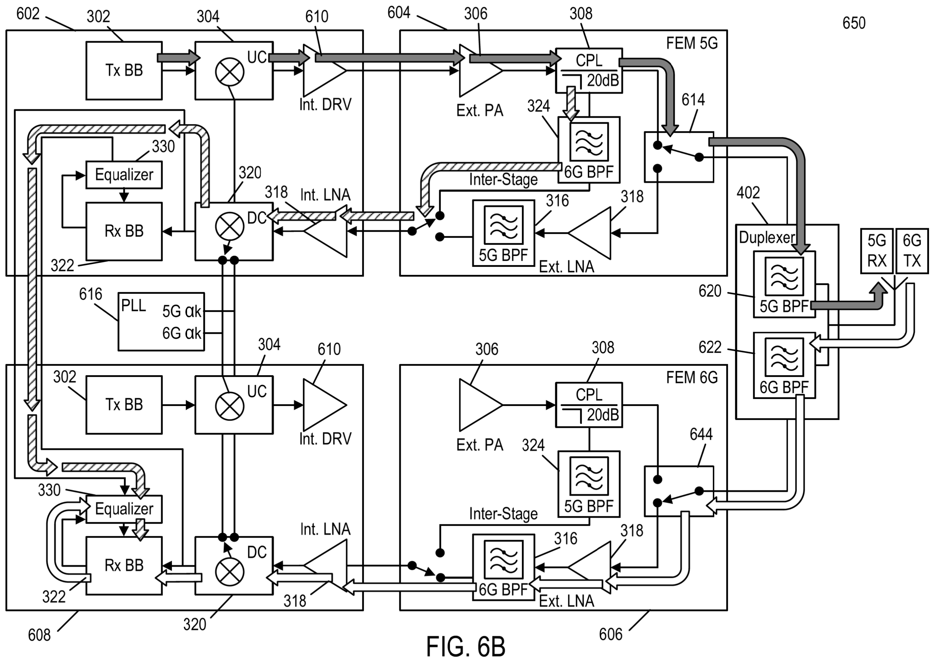

Referring now to FIGs. 6A and 6B, examples systems 600 and 650 for multiband integrated circuit configurations providing baseband interference mitigation using access point cores and front end modules of a wireless communication device. In example system configurations 600 and 650, in order to save implementation cost, the configurations can use existing idle down conversion paths of multiband chips or integrated circuits to implement the technical solutions. For instance, in Wi-Fi technology, receiving signal (Rx) path can idle during transmission (Tx) time and as the Rx resources can be idle during transmissions the Rx resources can be employed for the loopback path in the configuration involving the analog loopback with the analog BFP, down converter, equalizer and the demodulator forming the interference mitigation circuit 340. This approach can utilize routing inside the integrated circuit (e.g., the chip) rather than utilize additional semiconductor circuitry blocks to implement the loopback.

The baseband cancellation in a dual-band chip for the shared antenna embodiment can occur when one of the bands (e.g., 5G or 6G) are utilized for transmission while the remaining one of the two bands (e.g., the remaining one of the 6G or the 5G) is utilized for concurrent receiving of the signal. Accordingly, the example configurations in FIGs. 6A and 6B can correspond to instances in which the transmission occurs at 5G and receiving at 6G or when transmission occurs at 6G and receiving at 5G.

FIG. 6A illustrates an example of a system 600 for a multiband integrated circuit configuration providing baseband interference mitigation is illustrated. The example system 600 can include a first access point core or chip 602 that can be paired with a first front end module (FEM) 604 for a first channel or band. The example system 600 can also include a second access point core or chip 608 that can be paired with a second FEM 606 for a second channel or band. Each of the access point cores 602 or 608 can include their own respective modulator 302, an up converter 304 and an internal driver 610 on the transmission side, and an internal LNA 318, down converter 320, equalizer 330 and a demodulator 320 on the receiving side. Each of the FEMs 604 or 606 can include their own respective external PA 306, coupler 308 on the transmission side and the external LNA 318 and BPF 316 on the receiving side. The coupler 308 and the LNA 318 can be coupled with a Tx-Rx switch 614 leading to an external duplexer 402 for using one or more antennas 312 for transmissions of multi-band transmissions.

With respect to the access point core 602 and its FEM 604, as well as the access core point 608 and FEM 606, the transmission path can start with a modulator 302 for transmission at baseband, followed by an up converter 304 and an internal driver 610, which can include any functionalities of a power amplifier 306. From the internal driver 610 at the access point core, the signal can progress into the external power amplifier 306 of the FEM. From the PA 306, the signal can progress towards the coupler 308 from which it can be input into the Tx-Rx switch 614 that can be configured to switch between transmission and receiving paths, depending on the outgoing or incoming traffic. The coupler 308 can also provide a sample signal to the BPF 324, which can include any functionalities of the BPF 316.

The receiving path of the access point core and FEM can start with the external LNA 318 coupled with the BPF 316 of the FEM. The output signal from the BPF 316 can go into the internal LNA 318 of the access point core, from where it can move to the down converter 320 and demodulator 322, which can be modulated or adjusted by equalizer 330 of the access point core. The duplexer 402 that receives and provides signals to and from the Rx-Tx switches 614 of the FEMs 604 and 606, can include internal BPFs 620 and 622, which can be configured for band pass filtering the respective bands or channels of the transceiver chains. The output of the duplexer 402 can be coupled with the one or more antennas 312 for transmitting and receiving the signals. The access point cores 602 and 608 can each have their up converters 304 and down converters 320 be coupled with a phase lock loop (PLL) 616 providing clocks for each of the bands (e.g., 5 GHz and 6 GHz).

At a high level, the example system 600 can correspond to a system on a chip (SoC) that can correspond to 5 GHz and 6 GHz access point cores 602 and 608 each are connected to their appropriate corresponding FEMs 604 and 606. The FEMs 604 and 606 can be connected to a duplexer 402 in a shared antenna embodiment. The configuration can utilize Tx and Rx paths and can utilize idle circuitry of paths to implement the functionalities of the interference mitigating circuit 340. The Tx and Rx paths can each be configured according to either of the bands or channels, such as the 5 GHz or 6 GHz, using the PLL 616, and the internal clock circuits, which can be reset or configured for any of the transceiver Tx or Rx paths. While the examples presented herein discuss the solutions in the context of example bands or channels at 5 GHz or 6 GHz, it is understood that any other bands, channels or frequency ranges for implementing the technical solutions can be used. It is also understood that more that the technical solutions can be implemented with respect to more than two bands or channels, including for example three, four, five, six or more than six bands or channels, any of which can include their respective interference mitigation circuitry 340 to remove multiple interferences 338 from a received signal 342 at any band or channel.

The transmission (Tx) signal path in example system 600 can be illustrated using wide gray arrows can correspond to the transmission (Tx) signal path in the 6 GHz band or channel. In example system 600, the Tx path begins, as shown with wide gray arrow, at the modulator 302 of the access point core 608 at which the signal can be modulated for Tx baseband. From the modulator 302 of access point core 608, the signal can be up converted via the up converter 304 of the same access point core, and then be processed by the internal driver 610, the output of which can be fed into the PA 306 of the FEM 606. From the PA 306, the signal can be coupled into the coupler 308 of the FEM 606 and then to the Tx-Rx switch 614 and to the duplexer 402, for transmission via one or more antennas 312.

The signal receiving path (Rx) of the system 600 can be indicated with the wide white arrows, starting from the duplexer 402 and into the Tx-Rx switch 614 of the FEM 604. The output of the Tx-Rx switch 614 can be input into the LNA 318 and BPF 316 of the FEM 604. From the BPF 316 of the FEM 604, the signal can be input into the internal LNA 318 of the access point core 602, from where it can move to the down converter 320, demodulator 322 of the access point core 602, where the Rx signal can be demodulated. The output from the demodulator 322 can be input into the equalizer 330 of the access point core 602 as a feedback to continuously adjust (e.g., train or fine tune) the equalizer 330.

The analog loopback implementing the functionalities of the interference mitigation circuitry 340 can be shown using wide dashed arrows (with dashed diagonal lines). The processing path of the interference mitigation circuitry 340 can begin with the output of the output of a coupler 308 of the FEM 606 providing a transmission sample signal 336 to the BPF 324 of the FEM 606. The output of the BPF 324 can be provided (e.g., via a switch circuit) to the internal LNA 318 of the access point core 608, from which it can be processed by a down converter 320 of the access point core 608, from which it can be transmitted into the equalizer 330 of the access point core 602. In doing so, the system 600 can take advantage of the idle internal LNA 318 and idle down converter 320 at the access point core 608. The equalizer 330 of the access point core 602 can provide its output to the demodulator 322 of the same core, facilitating the demodulation of the received signal to remove the interference and improve the quality of the received signal. In doing so, the technical solutions utilize existing circuitry of two access point cores and two FEMs with an additional connection to take advantage of idle circuitry to implement interference cancellation.

FIG. 6B illustrates another example of a system 650 for a multiband integrated circuit configuration providing baseband interference mitigation is illustrated. Example system 650 can be the same or similar to the system 600 of FIG. 6A and can include the same or similar components arranged in the same or similar arrangement as the one described in connection with system 600 of FIG. 6A. System 650 can include a transmission path in access point core 602 that can start with a modulator 302 for transmission at baseband, followed by an up converter 304 and an internal driver 610, which can include any functionalities of a power amplifier 306. From the internal driver 610 at the access point core 602, the signal can progress into the external power amplifier 306 of the FEM 604. From the PA 306, the signal can progress towards the coupler 308 from which it can be input into the Tx-Rx switch 614 that can be configured to switch between transmission and receiving paths, depending on the outgoing or incoming traffic. The coupler 308 can also provide a sample signal to the BPF 324, which can include any functionalities of the BPF 316. The same configuration from access point core 602 and FEM 604 can exist in the access point core 608 and FEM 606.

The receiving path of the access point core and FEM can start with the external LNA 318 coupled with the BPF 316 of the FEM. The output signal from the BPF 316 can go into the internal LNA 318 of the access point core, from where it can move to the down converter 320 and demodulator 322, which can be modulated or adjusted by equalizer 330 of the access point core. The duplexer 402 that receives and provides signals to and from the Rx-Tx switches 614 of the FEMs 604 and 606, can include internal BPFs 620 and 622, which can be configured for band pass filtering the respective bands or channels of the transceiver chains. The output of the duplexer 402 can be coupled with the one or more antennas 312 for transmitting and receiving the signals. The access point cores 602 and 608 can each have their up converters 304 and down converters 320 be coupled with a phase lock loop (PLL) 616 providing clocks for each of the bands (e.g., 5 GHz and 6 GHz).

In example system 650, the transmission (Tx) signal path can be illustrated using wide gray arrows can correspond to the transmission (Tx) signal path in the 5 GHz band or channel. The Tx path can begin, as shown with wide gray arrow, at the modulator 302 of the access point core 602 at which the signal can be modulated for Tx baseband. From the modulator 302 of access point core 602, the signal can be up converted via the up converter 304 of the same access point core, and then be processed by the internal driver 610, the output of which can be fed into the PA 306 of the FEM 604. From the PA 306, the signal can be coupled into the coupler 308 of the FEM 604 and then to the Tx-Rx switch 614 and to the duplexer 402, for transmission via one or more antennas 312.

The signal receiving path (Rx) of the system 650 can be indicated with the wide white arrows, starting from the duplexer 402 and into the Tx-Rx switch 644 of the FEM 606. The output of the Tx-Rx switch 644 can be input into the LNA 318 and BPF 316 of the FEM 606. From the BPF 316 of the FEM 606, the signal can be input into the internal LNA 318 of the access point core 608, from where it can move to the down converter 320, demodulator 322 of the access point core 608, where the Rx signal can be demodulated. The output from the demodulator 322 can be input into the equalizer 330 of the access point core 608 as a feedback to continuously adjust (e.g., train or fine tune) the equalizer 330.

The analog loopback implementing the functionalities of the interference mitigation circuitry 340 can be shown using wide dashed arrows (with dashed diagonal lines). The processing path of the interference mitigation circuitry 340 can begin with the output of the output of a coupler 308 of the FEM 604 providing a transmission sample signal 336 to the BPF 324 of the FEM 604. The output of the BPF 324 can be provided (e.g., via a switch circuit) to the internal LNA 318 of the access point core 602, from which it can be processed by a down converter 320 of the access point core 602, from which it can be transmitted into the equalizer 330 of the access point core 608 (e.g., on the opposite pair of access point core and FEM pair). In doing so, the system 650 can take advantage of the idle internal LNA 318 and idle down converter 320 at the access point core 602 that is not being utilized during Tx. The equalizer 330 of the access point core 608 can provide its output to the demodulator 322 of the same core, facilitating the demodulation of the received signal to remove the interference and improve the quality of the received signal. In doing so, the technical solutions utilize existing circuitry of two access point cores and two FEMs with an additional connection to take advantage of idle circuitry to implement interference cancellation.

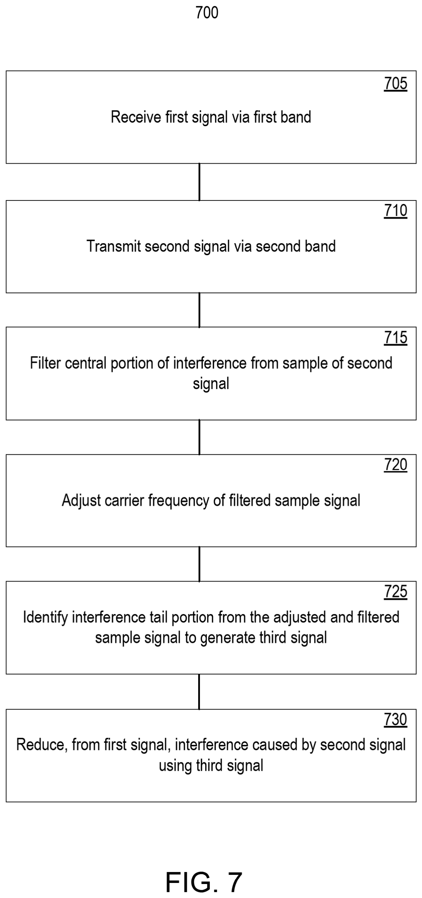

FIG. 7 illustrates a flow diagram of a method 700 for providing interference mitigation in a multiband wireless communication system. The method 700 can include acts 705-730 that can be performed by example systems, components and features described and discussed in connection with FIGS. 1-6B. At 705, a device can receive a first signal via a first band for wireless communications. At 710, the device can transmit a second signal via a second band for wireless communications. At 715, the device can filter a central portion of interference from a sample of the second signal. At 720, the device can adjust a carrier frequency of the filtered sample signal. At 725, the device can identify an interference tail portion from the adjusted and filtered sample signal to generate a third signal. At 730, the device can reduce, from the first signal, the interference caused by the second signal using the third signal.

At 705, a device can receive a first signal via a first band for wireless communications. The method can include a circuitry, such as a system circuitry that includes a plurality of wireless transceivers for transmitting and receiving wireless signals. The system circuitry, or at least one of its transceivers of the circuitry, can receive a first signal via a first band of a plurality of bands. The plurality of bands or channels can include any number of frequency ranges for exchanging wireless transmissions between wireless communication devices. Each of the plurality of transceivers can be configured to operate on a different band of the plurality of bands.

The plurality of wireless transceivers can include a first wireless transceiver of the plurality that is configured to receive the first signal via a first band. The first wireless transceiver can be configured for Wi-Fi wireless communication. The first wireless transceiver can be configured for wireless communications using other (e.g., non-Wi-Fi communications) such as Bluetooth, Zigbee, Thread, Z-Wave, Cellular Networks (e.g., including 4G and 5G cellular network communications), ultra-wideband (UWB) or internet of things (IoT) communications.

The first wireless transceiver can include any number of active or passive electronic components for generating, forming, modulating, demodulating or otherwise processing signals being wirelessly communicated. For instance, the first wireless transceiver can include any one or more of: a first bandpass filter, a first converter (e.g., an up converter or a down converter), an equalizer or a demodulator. For instance, the first wireless transceiver can be a transceiver configured for Wi-Fi wireless communication via at least one of a 5 Gigahertz (GHz) band or a 6 GHz band of the Wi-Fi or WLAN bands. The first wireless transceiver of the plurality of wireless transceivers can be configured to receive the first signal via the first band and can include a demodulator configured to demodulate the first signal to extract a signal-of-interest (e.g., received signal with the interference removed) upon the reduction of the interference from the first signal.

For instance, the first wireless transceiver can receive the signal via an antenna configured for receiving the wireless signals via the given band or channel (e.g., 5 GHz or 6 GHz). The signal can be processed by a band pass filter configured for the given band or channel and processed by a low noise amplifier. The output from the low noise amplifier can be processed by a down converter to adjust, reduce or remove the carrier frequency and provide an output that is input into a demodulator for removing the interference signal based on the signal or output of the equalizer.

At 710, the device can transmit a second signal via a second band for wireless communications. The second band for wireless communications can be any remaining band or channel other than the first band or channel of the first transceiver via which the first signal is received (e.g.., the remaining one of the 5 GHz or 6 GHz Wi-Fi band). The method can include the circuitry transmitting a second signal via a second band of the plurality of bands. The second signal can cause an interference with the first signal. The interference can include a central portion of the interference that can include a peak of the interference signal at a given frequency point and a tail portion that can cover an extended frequency range with a signal strength lower than that of the central portion. The tail portion of the interference can span past the band of the transmission (e.g., the second) signal and can extend into or through the first signal band range.

A second wireless transceiver for transmitting the second signal can include any number of electronic components, including any one or more of: a modulator, an up converter, a power amplifier a coupler or a band pass filter. The modulator can be configured to module the transmission data into the signal, the output of which can be input into an up converter to include a carrier signal that can correspond to the second band or channel of the transmission signal. The output signal from the up converter can be input into the power amplifier that can amplify the signal and provide it for coupling by the coupler. The coupler can output a transmission signal to the band pass filter to filter the signal according to the second band or channel for transmission via the antenna. The coupler can output a transmission sample signal, which can include a copy of the transmission signal at a lower signal strength range, such as 20 to 30 dB less signal strength than the signal strength of the transmission signal to be transmitted via the antenna.

At 715, the device can filter a central portion of interference from a sample of the second signal. The method can include the coupler of the second transceiver transmitting the second signal providing the transmission sample signal to the filter of an interference mitigation circuitry. The interference mitigation circuitry can include a band pass filter for filtering the sample signal, a down converter for down converting the carrier frequency of the band pass filtered signal into a signal having a different carrier frequency or into a baseband signal. Such a different carrier frequency filtered signal or the filtered baseband signal can be input into an equalizer of the interference mitigation circuitry to produce a signal based on which the interference (e.g., the tail portion of the interference) can be subtracted, removed, attenuated or reduced from the first signal (e.g., the received signal) at the first transceiver.

The circuitry system can include a plurality of interference mitigation circuitries for a plurality of transmission transceivers to reduce the plurality of tail interferences from a plurality of concurrently transmitted signals from the received (e.g., first) signal. In some configurations in which power amplifier modeling is utilized to remove interference from the received signal, the interference mitigation circuitry can include a power amplifier model that can model the amplified modulated signal from the modulator to generate the third signal via the equalizer to use the demodulator of the first transceiver to remove the tail portion interference from the first (e.g., received) signal.

The method can include the circuitry (e.g., the interference mitigation circuitry) reducing, by a band pass filter, from a sample of the second signal (e.g., the second signal received from the coupler of the second transceiver), the central portion of the interference to provide a filtered sample signal. The method can include the filter (e.g., the band pass filter) receive the sample of the first signal from an output of an amplifier of a wireless transceiver of the plurality of wireless transceivers that is configured to transmit the second signal. The filter can reduce, attenuate or remove, from the transmission sample of the first signal, frequencies outside of a predetermined range, such as frequencies corresponding to the central portion of the interference. The filter can remove or attenuate the interference corresponding to the band or channel of the second (e.g., transmission) transceiver.

At 720, the device can adjust a carrier frequency of the filtered sample signal. The method can include adjusting, by a converter, a carrier frequency of the filtered sample signal relative to a carrier frequency of the second signal to provide a converted sample signal. For example, a down converter can adjust, modify or change the carrier frequency of the band pass filtered transmission sample to produce a signal with a changed, modified, reduced or removed carrier frequency. For example, the converter can include a down converter that is configured to adjust the carrier frequency of the filtered sample signal to provide the converted sample signal at a baseband frequency (e.g., no carrier frequency). The output from the down converter can be input into an equalizer of the interference mitigation circuitry.

At 725, the device can identify an interference tail portion from the adjusted and filtered sample signal to generate a third signal. The method can include identifying, by an equalizer, from the converted sample signal, the tail portion of the interference. The equalizer can output or provide a third signal to offset the interference from the first signal, including for example the tail portion of the interference that can remain in the first signal (e.g., the signal received via the first transceiver).

The equalizer can be configured to set one or more parameters. The one or more parameters of the equalizer can control the equalizer to adjust at least one of a gain of the third signal according to a gain of the first signal or a frequency response of the third signal according to a frequency response of the first signal. For instance, the one or more parameters can adjust the third signal to match the first signal in terms of the gain, signal strength or amplitude, or the frequency. The one or more parameters can adjust a phase of the third signal according to the phase of the first signal. The one or more parameters can be adjusted or tuned based on the feedback signal that can include at least one of the down converted and amplified first signal (e.g., received signal) or a feedback signal from the demodulator of the first transceiver.

The equalizer can be configured to set the one or more parameters to adjust the third signal to offset a distortion in the first signal. The equalizer can utilize at a least square function to reduce a difference between a signal generated based on the third signal and the first signal. The least square function can be configured to track changes in the first signal over a time interval using a least mean squares (LMS) operation. The LMS operation can be configured to iteratively adjust parameters of the equalizer to control the third signal to reduce an error in a difference between a signal generated using the third signal and the first signal.

At 730, the device can reduce, from the first signal, the interference caused by the second signal using the third signal. The method can include a demodulator of the interference mitigation circuitry reducing the interference from the first signal based at least on the third signal. For example, the demodulator can be configured to reduce the interference from the first signal by subtracting, from the first signal, a signal generated by the equalizer using third signal. For example, the demodulator can be configured to combine the first signal with the third signal to remove the interference (e.g., the tail portion of the interference) from the received signal. The combination can include weighted addition or subtraction of the two signals or a spectral subtraction of the two signals in the frequency domain.

The demodulator can include another third signal from a second equalizer to remove a second interference (e.g., a second tail portion of a second interference) from another (e.g., a second) transmission via another transmission transceiver at the device. The demodulator can receive from the second equalizer another third signal to combine with the first signal to remove the second tail portion of the second interference from the first (e.g., received) signal.

Having now described some illustrative implementations, it is apparent that the foregoing is illustrative and not limiting, having been provided by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Any implementation disclosed herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

When an element is referred to herein as being "connected" or "coupled" to another element, it is to be understood that the elements can be directly connected or coupled the other element or have intervening elements present between the connected or coupled elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" beneath or above a particular element, it is to be understood that the elements can be directly located or positioned above or below the other element, or have intervening elements present between the two elements. In contrast, when an element is referred to as being "directly disposed" on or below another element, it should be understood that no intervening elements are present in the "direct" disposition between the elements. However, the existence of a direct disposition does not exclude other disposition, in which intervening elements may be present.

While operations are depicted in the drawings in a particular order, such operations are not required to be performed in the particular order shown or in sequential order, and all illustrated operations are not required to be performed. Actions described herein can be performed in a different order. The separation of various system components does not require separation in all implementations, and the described program components can be included in a single hardware or software product.

The following are further embodiments of the invention:

    1. A device comprising:

        a plurality of wireless transceivers, each of the plurality of wireless transceivers operating on a different band of a plurality of bands;

        a circuitry to:
        receive a first signal via a first band of the plurality of bands;

transmit a second signal via a second band of the plurality of bands, the second signal causing an interference with the first signal, the interference comprising a central portion and a tail portion;

a band pass filter to reduce, from a sample of the second signal, the central portion of the interference to provide a filtered sample signal;

a converter to adjust a carrier frequency of the filtered sample signal relative to a carrier frequency of the second signal to provide a converted sample signal;

an equalizer to identify, from the converted sample signal, the tail portion of the interference to provide a third signal to offset the interference from the first signal; and

a demodulator to reduce the interference from the first signal based at least on the third signal.

2. The system of embodiment 1, wherein the plurality of wireless transceivers include a first wireless transceiver to receive the first signal and a second wireless transceiver to transmit the second signal, the first wireless transceiver and the second wireless transceiver each configured for Wi-Fi wireless communication.

3. The system of embodiment 2, wherein the first wireless transceiver includes a first bandpass filter, a first converter, the equalizer and the demodulator and the second wireless transceiver includes the bandpass filter and the converter.

4. The system of embodiment 3, wherein the first wireless transceiver is configured for Wi-Fi wireless communication via a first one of a 5 Gigahertz (GHz) band or a 6 GHz band and the second wireless transceiver is configured for Wi-Fi wireless communication via a second one of the 5 GHz band or the 6 GHz band.

5. The system of embodiment 1, comprising:
a first wireless transceiver of the plurality of wireless transceivers configured to receive the first signal via the first band and wherein the first wireless transceiver includes the demodulator and wherein the demodulator is configured to demodulate the first signal to extract a signal-of-interest following the reduction of the interference from the first signal.

6. The system of embodiment 1, wherein the band pass filter is configured to:

receive the sample of the first signal from an output of an amplifier of a wireless transceiver of the plurality of wireless transceivers that is configured to transmit the second signal; and

reduce, from the sample of the first signal, frequencies outside of a predetermined range corresponding to the central portion.

7. The system of embodiment 1, wherein the converter is configured to adjust the carrier frequency of the filtered sample signal to provide the converted sample signal at a baseband frequency.

8. The system of embodiment 1, wherein the equalizer is configured to set one or more parameters that control the equalizer to adjust at least one of a gain of the third signal according to a gain of the first signal or a frequency response of the third signal according to a frequency response of the first signal.

9. The system of embodiment 8, wherein the equalizer is configured to set the one or more parameters to adjust the third signal to offset a distortion in the first signal.

10. The system of embodiment 1, wherein the equalizer utilizes a least square function to reduce a difference between a signal generated based on the third signal and the first signal, wherein the least square function is configured to track changes in the first signal over a time interval using a least mean squares (LMS) operation.

11. The system of embodiment 10, wherein the LMS operation is configured to iteratively adjust parameters of the equalizer to control the third signal to reduce an error in a difference between a signal generated using the third signal and the first signal.

12. The system of embodiment 1, wherein the demodulator is configured to reduce the interference from the first signal by subtracting, from the first signal, a signal generated by the equalizer using third signal.

13. A method, comprising:
receiving, by a circuitry comprising a plurality of wireless transceivers, a first signal via a first band of a plurality of bands, each of the plurality of transceivers operating on a different band of the plurality of bands;

transmitting, by the circuitry, a second signal via a second band of the plurality of bands, the second signal causing an interference with the first signal, the interference comprising a central portion and a tail portion;

reducing, by a band pass filter, from a sample of the second signal, the central portion of the interference to provide a filtered sample signal;

adjusting, by a converter, a carrier frequency of the filtered sample signal relative to a carrier frequency of the second signal to provide a converted sample signal;

identifying, by an equalizer, from the converted sample signal, the tail portion of the interference to provide a third signal to offset the interference from the first signal; and

reducing, by a demodulator, the interference from the first signal based at least on the third signal.

14. The method of embodiment 13, wherein the plurality of wireless transceivers include a first wireless transceiver to receive the first signal and a second wireless transceiver to transmit the second signal, the first wireless transceiver and the second wireless transceiver each configured for Wi-Fi wireless communication, and wherein the first wireless transceiver includes a first bandpass filter, a first converter, the equalizer and the demodulator and the second wireless transceiver includes the bandpass filter and the converter.

15. The method of embodiment 14, wherein the first wireless transceiver is configured for Wi-Fi wireless communication via a first one of a 5 Gigahertz (GHz) band or a 6 GHz band and the second wireless transceiver is configured for Wi-Fi wireless communication via the 5 GHz band or the 6 GHz band.

16. The method of embodiment 13, comprising:

receiving, by the band pass filter, the sample of the first signal from an output of an amplifier of a wireless transceiver of the plurality of wireless transceivers, wherein the wireless transceiver is configured to transmit the second signal; and

reducing, by the band pass filter, from the sample of the first signal, frequencies outside of a predetermined range corresponding to the central portion.

17. The method of embodiment 13, comprising:

adjusting, by the converter, the carrier frequency of the filtered sample signal to provide the converted sample signal at a baseband frequency; and

setting, by the equalizer, one or more parameters that control the equalizer to adjust at least one of: a gain of the third signal according to a gain of the first signal, a frequency response of the third signal according to a frequency response of the first signal or the third signal to offset a distortion in the first signal.

18. The method of embodiment 13, comprising: reducing, by a least square function of the equalizer, a difference between a signal generated based on the third signal and the first signal, wherein the least square function is configured to track changes in the first signal over a time interval using a least mean squares (LMS) operation.

19. The method of embodiment 13, comprising: iteratively adjusting, via parameters for controlling the equalizer, the third signal to reduce an error in a difference between a signal generated using the third signal and the first signal.

20. A circuitry comprising:

a plurality of wireless transceivers configured to operate on a first band of a plurality of bands for Wi-Fi wireless communication and a second band of the plurality of bands for Wi-Fi wireless communication, the plurality of wireless transceivers configured to:
receive a first signal via a first band of the plurality of bands; and
transmit a second signal via a second band of the plurality of bands, the second signal causing an interference with the first signal, the interference comprising a central portion and a tail portion, wherein the plurality of wireless transceivers comprise:

a band pass filter to reduce, from a sample of the second signal, the central portion of the interference to provide a filtered sample signal;

a converter to adjust a carrier frequency of the filtered sample signal relative to a carrier frequency of the second signal to provide a converted sample signal;

an equalizer to identify, from the converted sample signal, the tail portion of the interference to provide a third signal to offset the interference from the first signal; and

a demodulator to reduce the interference from the first signal based at least on the third signal.

**Claims**

1. A device comprising:

   a plurality of wireless transceivers, each of the plurality of wireless transceivers operating on a different band of a plurality of bands;
   a circuitry to:

      receive a first signal via a first band of the plurality of bands;
      transmit a second signal via a second band of the plurality of bands, the second signal causing an interference with the first signal, the interference comprising a central portion and a tail portion;
      a band pass filter to reduce, from a sample of the second signal, the central portion of the interference to provide a filtered sample signal;
      a converter to adjust a carrier frequency of the filtered sample signal relative to a carrier frequency of the second signal to provide a converted sample signal;
      an equalizer to identify, from the converted sample signal, the tail portion of the interference to provide a third signal to offset the interference from the first signal; and
      a demodulator to reduce the interference from the first signal based at least on the third signal.

2. The system of claim 1, wherein the plurality of wireless transceivers include a first wireless transceiver to receive the first signal and a second wireless transceiver to transmit the second signal, the first wireless transceiver and the second wireless transceiver each configured for Wi-Fi wireless communication.

3. The system of claim 2, wherein the first wireless transceiver includes a first bandpass filter, a first converter, the equalizer and the demodulator and the second wireless transceiver includes

   the bandpass filter and the converter
   in particular,
   wherein the first wireless transceiver is configured for Wi-Fi wireless communication via a first one of a 5 Gigahertz (GHz) band or a 6 GHz band and the second wireless transceiver is configured for Wi-Fi wireless communication via a second one of the 5 GHz band or the 6 GHz band.

4. The system of one of the previous claims, comprising:
   a first wireless transceiver of the plurality of wireless transceivers configured to receive the first signal via the first band and wherein the first wireless transceiver includes the demodulator and wherein the demodulator is configured to demodulate the first signal to extract a signal-of-interest following the reduction of the interference from the first signal.

5. The system of one of the previous claims, wherein the band pass filter is configured to:

   receive the sample of the first signal from an output of an amplifier of a wireless transceiver of the plurality of wireless transceivers that is configured to transmit the second signal; and
   reduce, from the sample of the first signal, frequencies outside of a predetermined range corresponding to the central portion.

6. The system of one of the previous claims, wherein the converter is configured to adjust the carrier frequency of the filtered sample signal to provide the converted sample signal at a baseband frequency.

7. The system of one of the previous claims, wherein the equalizer is configured to set one or more parameters that control the equalizer to adjust at least one of a gain of the third signal according to a gain of the first signal or a frequency response of the third signal according to a frequency response of the first signal,
   in particular,
   wherein the equalizer is configured to set the one or more parameters to adjust the third signal to offset a distortion in the first signal.

8. The system of one of the previous claims, wherein the equalizer utilizes a least square function to reduce a difference between a signal generated based on the third signal and the first signal, wherein the least square function is configured to track changes in the first signal over a time interval using a least mean squares (LMS) operation,
   in particular,
   wherein the LMS operation is configured to iteratively adjust parameters of the equalizer to control the third signal to reduce an error in a difference between a signal generated using the third signal and the first signal.

9. The system of one of the previous claims, wherein the demodulator is configured to reduce the interference from the first signal by subtracting, from the first signal, a signal generated by the equalizer using third signal.

10. A method, comprising:

   receiving, by a circuitry comprising a plurality of wireless transceivers, a first signal via a first band of a plurality of bands, each of the plurality of transceivers operating on a different band of the plurality of bands;

transmitting, by the circuitry, a second signal via a second band of the plurality of bands, the second signal causing an interference with the first signal, the interference comprising a central portion and a tail portion;

reducing, by a band pass filter, from a sample of the second signal, the central portion of the interference to provide a filtered sample signal;

adjusting, by a converter, a carrier frequency of the filtered sample signal relative to a carrier frequency of the second signal to provide a converted sample signal;

identifying, by an equalizer, from the converted sample signal, the tail portion of the interference to provide a third signal to offset the interference from the first signal; and

reducing, by a demodulator, the interference from the first signal based at least on the third signal.

11. The method of claim 10, wherein the plurality of wireless transceivers include a first wireless transceiver to receive the first signal and a second wireless transceiver to transmit the second signal, the first wireless transceiver and the second wireless transceiver each configured for Wi-Fi wireless communication, and wherein the first wireless transceiver includes a first bandpass filter, a first converter, the equalizer and the demodulator and the second wireless transceiver includes the bandpass filter and the converter,

in particular,

wherein the first wireless transceiver is configured for Wi-Fi wireless communication via a first one of a 5 Gigahertz (GHz) band or a 6 GHz band and the second wireless transceiver is configured for Wi-Fi wireless communication via the 5 GHz band or the 6 GHz band.

12. The method of one of claims 10 or 11, comprising:

receiving, by the band pass filter, the sample of the first signal from an output of an amplifier of a wireless transceiver of the plurality of wireless transceivers, wherein the wireless transceiver is configured to transmit the second signal; and

reducing, by the band pass filter, from the sample of the first signal, frequencies outside of a predetermined range corresponding to the central portion.

13. The method of one of claims 10 to 12, comprising:

adjusting, by the converter, the carrier frequency of the filtered sample signal to provide the converted sample signal at a baseband frequency; and

setting, by the equalizer, one or more parameters that control the equalizer to adjust at least one of: a gain of the third signal according to a gain of the first signal, a frequency response of the third signal according to a frequency response of the first signal or the third signal to offset a distortion in the first signal.

14. The method of one of claims 10 to 13, comprising:
reducing, by a least square function of the equalizer, a difference between a signal generated based on the third signal and the first signal, wherein the least square function is configured to track changes in the first signal over a time interval using a least mean squares (LMS) operation
and/or
the method further comprising:
iteratively adjusting, via parameters for controlling the equalizer, the third signal to reduce an error in a difference between a signal generated using the third signal and the first signal.

15. A circuitry comprising:

a plurality of wireless transceivers configured to operate on a first band of a plurality of bands for Wi-Fi wireless communication and a second band of the plurality of bands for Wi-Fi wireless communication, the plurality of wireless transceivers configured to:

receive a first signal via a first band of the plurality of bands; and

transmit a second signal via a second band of the plurality of bands, the second signal causing an interference with the first signal, the interference comprising a central portion and a tail portion, wherein the plurality of wireless transceivers comprise:

a band pass filter to reduce, from a sample of the second signal, the central portion of the interference to provide a filtered sample signal;

a converter to adjust a carrier frequency of the filtered sample signal relative to a carrier frequency of the second signal to provide a converted sample signal;

an equalizer to identify, from the converted sample signal, the tail portion of the interference to provide a third signal to offset the interference from the first signal; and

a demodulator to reduce the interference from the first signal based at least on the third signal.

FIG. 1

FIG. 2

Computing system 200

Cache 202

Processor 201

I/O Components 205

Communication System 204

Network Interface Device 203

Memory 206

Display 207

Input Device 208

300

Antenna 312

302
Modulator

304
Up Converter
(e.g., first band)

306
PA

308
Coupler
(e.g., 30dB)

310
First Band
BPF

First
Transceiver
332

Transmission Sample 336

Interference 338

Transmission Signal 344

Down converter
(e.g., second band)

Second
Band BPF

Interference
Mitigation
Circuitry 340

326

324

~20dB

Antenna 314

328
Equalizer

330
Equalizer

Second
Transceiver
334

Demodulator

Down converter
(e.g., second band)

LNA

Second
Band BPF

Received signal 342

322

320

318

316

FIG. 3A

EP 4 757 191 A1

FIG. 3B

350

First band 352

Second band 354

Interference 338

Rx

Tx

Tail Portion 358
(e.g., out of band portion of Tx signal falling on Rx channel)

Central portion 356

EP 4 757 191 A1

26

FIG. 4

EP 4 757 191 A1

FIG. 5

FIG. 6A

FIG. 6B

EP 4 757 191 A1

700

```
┌─────────────────────────────────────────────┐
│                                         705  │
│                                              │
│         Receive first signal via first band  │
│                                              │
└─────────────────────────────────────────────┘
                       │
┌─────────────────────────────────────────────┐
│                                         710  │
│                                              │
│       Transmit second signal via second band │
│                                              │
└─────────────────────────────────────────────┘
                       │
┌─────────────────────────────────────────────┐
│                                         715  │
│                                              │
│   Filter central portion of interference from│
│            sample of second signal           │
│                                              │
└─────────────────────────────────────────────┘
                       │
┌─────────────────────────────────────────────┐
│                                         720  │
│                                              │
│   Adjust carrier frequency of filtered sample│
│                    signal                    │
│                                              │
└─────────────────────────────────────────────┘
                       │
┌─────────────────────────────────────────────┐
│                                         725  │
│                                              │
│  Identify interference tail portion from the │
│ adjusted and filtered sample signal to       │
│           generate third signal              │
│                                              │
└─────────────────────────────────────────────┘
                       │
┌─────────────────────────────────────────────┐
│                                         730  │
│                                              │
│ Reduce, from first signal, interference      │
│ caused by second signal using third signal   │
│                                              │
└─────────────────────────────────────────────┘
```

# FIG. 7

Europäisches
Patentamt

European
Patent Office

Office européen
des brevets

# EUROPEAN SEARCH REPORT

**Application Number**

EP 25 21 9716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/089397 A1 (VETTER KURT G [US] ET AL) 17 April 2008 (2008-04-17) * paragraphs [0015] - [0031]; figures 2,5 * | 1-15 | INV. H04B1/525 ADD. H04B1/00 |
| X | US 2018/131502 A1 (ASKAR RAMEZ [DE] ET AL) 10 May 2018 (2018-05-10) * paragraphs [0015], [0061], [0075] - [0088]; figure 3 * | 1-15 | |
| X | US 2017/230210 A1 (NARASIMHA MADIHALLY [US] ET AL) 10 August 2017 (2017-08-10) * paragraphs [0037] - [0047]; figure 3A * | 1-15 | |

| | TECHNICAL FIELDS SEARCHED (IPC) |
|---|---|
| | H04B |

The present search report has been drawn up for all claims

| Place of search | Date of completion of the search | Examiner |
|---|---|---|
| Munich | 2 April 2026 | Marques, Gabriela |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

2

## ANNEX TO THE EUROPEAN SEARCH REPORT
## ON EUROPEAN PATENT APPLICATION NO.

EP 25 21 9716

02-04-2026

| Patent document cited in search report | Publication date | Patent family member(s) | | Publication date |
|---|---|---|---|---|
| US 2008089397 A1 | 17-04-2008 | CN | 101529729 A | 09-09-2009 |
| | | EP | 2082486 A1 | 29-07-2009 |
| | | JP | 2010507337 A | 04-03-2010 |
| | | KR | 20090068368 A | 26-06-2009 |
| | | KR | 20090085687 A | 07-08-2009 |
| | | KR | 20130025430 A | 11-03-2013 |
| | | TW | 200820648 A | 01-05-2008 |
| | | TW | 200915747 A | 01-04-2009 |
| | | US | 2008089397 A1 | 17-04-2008 |
| | | WO | 2008048534 A1 | 24-04-2008 |
| US 2018131502 A1 | 10-05-2018 | CN | 108028673 A | 11-05-2018 |
| | | EP | 3323204 A1 | 23-05-2018 |
| | | JP | 6487109 B2 | 20-03-2019 |
| | | JP | 2018524941 A | 30-08-2018 |
| | | KR | 20180030120 A | 21-03-2018 |
| | | US | 2018131502 A1 | 10-05-2018 |
| | | WO | 2017008851 A1 | 19-01-2017 |
| US 2017230210 A1 | 10-08-2017 | US | 2017230210 A1 | 10-08-2017 |
| | | WO | 2017139347 A1 | 17-08-2017 |